(19) Europäisches Patentamt
European Patent Office
Office européen des brevets

(11) EP 4 130 140 A1

(12) EUROPEAN PATENT APPLICATION
published in accordance with Art. 153(4) EPC

(43) Date of publication:
**08.02.2023 Bulletin 2023/06**

(21) Application number: **21780331.1**

(22) Date of filing: **11.03.2021**

(51) International Patent Classification (IPC):
***C08L 23/08*** *(1974.07)* ***C08L 23/26*** *(1974.07)*
***C08L 77/06*** *(1974.07)* ***C08K 3/013*** *(2018.01)*

(52) Cooperative Patent Classification (CPC):
**C08K 3/013; C08L 23/08; C08L 23/26; C08L 77/06**

(86) International application number:
**PCT/JP2021/009716**

(87) International publication number:
**WO 2021/200007 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 JP 2020063404**

(71) Applicant: **Mitsui Chemicals, Inc.**
**Tokyo 105-7122 (JP)**

(72) Inventors:
- **UEDA, Kosuke**
  **Sodegaura-shi**
  **Chiba 299-0265 (JP)**
- **WASHIO, Isao**
  **Sodegaura-shi**
  **Chiba 299-0265 (JP)**
- **TANAKA, Hirokazu**
  **Sodegaura-shi**
  **Chiba 299-0265 (JP)**
- **NAKAMURA, Tomoya**
  **Sodegaura-shi**
  **Chiba 299-0265 (JP)**

(74) Representative: **Hoffmann Eitle**
**Patent- und Rechtsanwälte PartmbB**
**Arabellastraße 30**
**81925 München (DE)**

# (54) SEMI-AROMATIC POLYAMIDE RESIN COMPOSITION AND MOLDED ARTICLES THEREFROM

(57) This semi-aromatic polyamide resin composition comprises a semi-aromatic polyamide resin (A), a relatively low-density olefin polymer (B 1), and a relatively high-density olefin polymer (B2). The average content for the olefin polymer (B 1) of component units derived from unsaturated carboxylic acid or a derivative thereof is 0.01-5 mass%, and the average content for the olefin polymer (B2) of the component units is 0-5 mass%. The total content of the olefin polymer (B1) and olefin polymer (B2) is 10-30 mass parts per 100 mass parts of the total of (A), (B 1), and (B2), and the content mass ratio (B 1B2) satisfies 0.5 ≤ B1/B2 ≤ 500.



Processed by Luminess, 75001 PARIS (FR)

## Description

Technical Field

The present invention relates to a semi-aromatic polyamide resin composition and a molded product thereof.

Background Art

Various semi-aromatic polyamide resin compositions are conventionally known as molding materials. For example, Patent Literature 1 discloses a polyamide composition composed of: a semi-aromatic polyamide containing a dicarboxylic acid unit (a) composed of 50 to 100mol% of a component unit derived from terephthalic acid and 0 to 40mol% of a component unit derived from an aromatic dicarboxylic acid other than terephthalic acid or a straight-chain aliphatic dicarboxylic acid having 6 to 18 carbon atoms, and a component unit (b) derived from an alkylene diamine; and a modified elastic copolymer. Further, polyamide compositions composed of such a semi-aromatic polyamide and modified elastic polymer are also known to be excellent in heat resistance and impact resistance (for example, Patent Literatures 2 and 3).

In recent years, there has been studied the weight reduction by replacing metal-made members used for automotive parts by resins. Polyamide resins, since being remarkably lighter in weight than metals, and having excellent rigidity, heat resistance and oil resistance, are suitably used as resin materials constituting automotive parts.

As resin materials constituting automotive parts, there are proposed a polyamide resin composition containing a polyamide resin and a glass fiber (for example, Patent Literature 4), and a polyamide composition containing a semi-aromatic polyamide resin (A), a relatively low-density modified polyolefin (B), a copper compound (C) and an organic stabilizer (D) (for example, Patent Literature 5).

Citation List

Patent Literature

PTL 1
Japanese Patent Application Laid-Open No. 4-108855
PTL 2
Japanese Patent Application Laid-Open No. 2-41318
PTL 3
Japanese Patent Application Laid-Open No. 5-98152
PTL 4
Japanese Patent Application Laid-Open No. 2-240160
PTL 5
Japanese Patent Application Laid-Open No. 2010-202724

Summary of Invention

Technical Problem

These polyamide resin compositions, though having a good rigidity, that is, having a high strength, even at high temperatures, have problems of being low in flexibility and low in elongation at break. With the elongation at break being low, molded products are liable to be broken when being assembled or otherwise treated.

The present invention has been achieved in consideration of the above situation and an object of the present invention is to provide a semi-aromatic polyamide resin composition having a high strength and simultaneously having a high elongation at break, and a molded product thereof.

Solution to Problem

The present invention relates to the following semi-aromatic polyamide resin composition and molded product thereof.

A semi-aromatic polyamide resin composition of the present invention includes:

a semi-aromatic polyamide resin (A) having a melting point of 280 to 330°C as measured by a differential scanning

calorimeter (DSC);
an olefin polymer (B1) having a relatively low density; and
an olefin polymer (B2) having a relatively high density,
in which:

the semi-aromatic polyamide resin (A) includes a component unit derived from a dicarboxylic acid and a component unit derived from a diamine;
the component unit derived from a dicarboxylic acid contains 45mol% or more of a component unit derived from terephthalic acid with respect to a total molar number of the component unit derived from a dicarboxylic acid;
the component unit derived from a diamine contains 50 to 100mol% of a component unit derived from a straight-chain alkylenediamine having 4 to 18 carbon atoms, and 0 to 50mol% of a component unit derived from a branched alkylenediamine having 4 to 18 carbon atoms;
the olefin polymer (B1) is a modified ethylene·$\alpha$-olefin copolymer (B1-1) modified with an unsaturated carboxylic acid or a derivative thereof and having a density of 0.80 g/cm$^3$ or higher and lower than 0.89 g/cm$^3$, or a mixture of the modified ethylene·$\alpha$-olefin copolymer (B1-1) and an unmodified ethylene·$\alpha$-olefin copolymer (B1-2) having a density of 0.80 g/cm$^3$ or higher and lower than 0.89 g/cm$^3$;
an average content of the component unit derived from an unsaturated carboxylic acid or a derivative thereof in the olefin polymer (B1) is 0.01 to 5mass%;
the olefin polymer (B2) is composed of at least one of a modified ethylene polymer (B2-1) modified with an unsaturated carboxylic acid or a derivative thereof and having a density of 0.89 to 0.97 g/cm$^3$, and an unmodified ethylene polymer (B2-2) having a density of 0.89 to 0.97 g/cm$^3$;
an average content of the component unit derived from an unsaturated carboxylic acid or a derivative thereof in the olefin polymer (B2) is 0 to 5mass%;
a total content of the olefin polymer (B1) and the olefin polymer (B2) is 10 to 30 parts by mass with respect to 100 parts by mass of the total of the semi-aromatic polyamide resin (A), the olefin polymer (B1) and the olefin polymer (B2); and
a content mass ratio (B1/B2) of the olefin polymer (B1) to the olefin polymer (B2) satisfies $0.5 \leq B1/B2 \leq 500$.

The molded product of the present invention includes the semi-aromatic polyamide resin composition of the present invention.

Advantageous Effects of Invention

According to the present invention, there can be provided a semi-aromatic polyamide resin composition having a high strength and simultaneously having a high elongation at break, and a molded product thereof.

Description of Embodiments

It is known that the low-density olefin polymers (B1), due to high flexibility, imparts a high elongation at break to molded products to be obtained, while the high-density olefin polymers (B2), due to low flexibility, imparts a low elongation at break to molded products to be obtained.

By contrast, the present inventors have made studies including combining a specific low-density olefin polymer (B1) (a low-density olefin polymer containing a component unit derived from an unsaturated carboxylic acid or a derivative thereof) and a high-density olefin polymer (B2), and varying the content ratio thereof, and have then found that in the case where the content ratio is in a specific range, as compared with the case where the low-density specific olefin polymer (B1) is used singly, the flexibility of a molded product becomes remarkably high (while the strength of a molded product is retained) and the elongation at break thereof becomes specifically high.

The reason therefor is not clear, but is conceivably as follows.

By mixing the low-density specific olefin polymer (B1) and the high-density olefin polymer (B2) in a specific content ratio, there is formed a structure in which phases of the high-density olefin polymer (B2) are dispersed in a phase of the low-density specific olefin polymer (B1). It is conceivable that due to such a structure being formed, while the strength of a molded product is raised, the elongation at break can remarkably be raised. Hereinafter, the constitution of the present invention will be described.

1. Semi-Aromatic Polyamide Resin Composition

The semi-aromatic polyamide resin composition of the present invention contains, at least, a semi-aromatic polyamide resin (A), an olefin polymer (B1) and an olefin polymer (B2).

1-1. Semi-Aromatic Polyamide Resin (A)

The semi-aromatic polyamide resin (A) contains a component unit [a] derived from dicarboxylic acids and a component unit [b] derived from diamines.

The component unit [a] derived from dicarboxylic acids:

The component unit [a] derived from dicarboxylic acids contains a component unit derived from terephthalic acid. The content of the component unit derived from terephthalic acid is, with respect to the total molar number of the component unit [a] derived from dicarboxylic acids, 45mol% or higher, preferably 50 to 90mol% and more preferably 55 to 80mol%.

The component unit [a] derived from dicarboxylic acids may further contain a unit (a-2) derived from an aromatic dicarboxylic acid component other than terephthalic acid, and a component unit (a-3) derived from an aliphatic dicarboxylic acid having 4 to 20 carbon atoms.

Examples of the aromatic dicarboxylic acid other than terephthalic acid include isophthalic acid, 2-methylterephthalic acid and naphthalenedicarboxylic acid. Among these, isophthalic acid is preferable.

The aliphatic dicarboxylic acid may be an aliphatic dicarboxylic acid having an alkylene group having 4 to 20, preferably 6 to 12 carbon atoms. Examples of such an aliphatic dicarboxylic acid include succinic acid, adipic acid, azelaic acid and sebacic acid. Among these, adipic acid and sebacic acid are preferable.

The total content of the unit (a-2) derived from an aromatic dicarboxylic acid component other than terephthalic acid and the component unit (a-3) derived from an aliphatic dicarboxylic acid having 4 to 20 carbon atoms is, 0 to 55mol%, preferably 10 to 50mol% and more preferably 20 to 45mol%.

For example, due to that the component unit [a] derived from dicarboxylic acids contains a small amount of the component unit (a-3) derived from an aliphatic dicarboxylic acid, the moldability of the semi-aromatic polyamide resin (A) can further be improved. In particular, in the semi-aromatic polyamide resin (A) having a content of the component unit derived from an aliphatic dicarboxylic acid of 55mol% or lower and a content of the component unit derived from terephthalic acid of 45mol% or higher, the water absorption coefficient is low and the melting point easily becomes 280°C or higher. A molded product obtained from such a semi-aromatic polyamide resin (A) is small in dimensional change by water absorption, and can be sufficient also in heat resistance.

The semi-aromatic polyamide resin (A) may further contain, other than the above component units, a small amount of a component unit derived from a tri- or more basic polyvalent carboxylic acid, such as trimellitic acid or pyromellitic acid. The content of such a component unit derived from a polyvalent carboxylic acid may be, with respect to the total molar number of the component unit [a] derived from dicarboxylic acids, usually 0 to 5mol%.

The component unit [b] derived from diamines:

The component unit [b] derived from diamines contains a component unit (b-1) derived from a straight-chain alkylenediamine having 4 to 18 carbon atoms.

Examples of the straight-chain alkylenediamine include 1,4-diaminobutane, 1,6-diaminohexane, 1,7-diaminoheptane, 1,8-diaminooctane, 1,9-diaminononane, 1,10-diaminodecane, 1,11-diaminoundecane and 1,12-diaminododecane. Among these, preferable are 1,6-diaminohexane, 1,8-diaminooctane, 1,10-diaminodecane and 1,12-diaminododecane, and 1,6-diaminohexane is more preferable.

The content of the component unit (b-1) derived from a straight-chain alkylenediamine having 4 to 18 carbon atoms is, with respect to the total molar number of the component unit [b] derived from diamines, 50 to 100mol%, preferably 50 to 99mol% and more preferably 50 to 98mol%.

It is preferable that the component unit [b] derived from diamines further contains a component unit (b-2) derived from a branched alkylenediamine having 4 to 18 carbon atoms. Here, the number of carbon atoms of the branched alkylenediamine is, unless otherwise specifically limited, the total of the number of carbon atoms of the main-chain alkylene group and the number of carbon atoms of the side-chain alkyl groups.

Examples of the branched alkylenediamine having 4 to 18 carbon atoms include 1-butyl-1,2-diamino-ethane, 1,1-dimethyl-1,4-diamino-butane, 1-ethyl-1,4-diamino-butane, 1,2-dimethyl-1,4-diamino-butane, 1,3-dimethyl-1,4-diamino-butane, 1,4-dimethyl-1,4-diamino-butane, 2,3-dimethyl-1,4-diamino-butane, 2-methyl-1,5-diaminopentane, 2,5-dimethyl-1,6-diamino-hexane, 2,4-dimethyl-1,6-diamino-hexane, 3,3-dimethyl-1,6-diamino-hexane, 2,2-dimethyl-1,6-diamino-hexane, 2,2,4-trimethyl-1,6-diamino-hexane, 2,4,4-trimethyl-1,6-diamino-hexane, 2,4-diethyl-1,6-diamino-hexane, 2,3-dimethyl-1,7-diamino-heptane, 2,4-dimethyl-1,7-diamino-heptane, 2,5-dimethyl-1,7-diamino-heptane, 2,2-dimethyl-1,7-diamino-heptane, 2-methyl-4-ethyl-1,7-diamino-heptane, 2-ethyl-4-methyl-1,7-diamino-heptane, 2,2,5,5-tetramethyl-1,7-diamino-heptane, 3-isopropyl-1,7-diamino-heptane, 3-isooctyl-1,7-diamino-heptane, 2-methyl-1,8-diaminooctane, 1,3-dimethyl-1,8-diamino-octane, 1,4-dimethyl-1,8-diamino-octane, 2,4-dimethyl-1,8-diaminooctane, 3,4-dimethyl-1,8-diamino-octane, 4,5-dimethyl-1,8-diamino-octane, 2,2-dimethyl-1,8-diamino-octane, 3,3-dimethyl-1,8-diamino-octane, 4,4-dimethyl-1,8-diamino-octane, 3,3,5-trimethyl-1,8-diamino-octane, 2,4-diethyl-1,8-diamino-octane and 5-methyl-1,9-diamino-nonane. Among these, preferable are branched alkylenediamines having one or two side-chain alkyl groups having 1 or 2 carbon atoms and having the main chain having 4 to 10 carbon atoms, and 2-methyl-1,5-diaminopentane is more preferable.

The content of the component unit (b-2) derived from a branched alkylenediamine having 4 to 18 carbon atoms is 0 to 50mol%, preferably 1 to 45mol% and more preferably 2 to 50mol%.

Due to that the component unit [b] derived from diamines thus contains the component units derived from two kinds of specific alkylenediamines in the above-mentioned amounts, the melting point of the semi-aromatic polyamide resin (A) can be lowered to such a degree that the semi-aromatic polyamide resin composition causes no gas burning in molding. Further, the melt flowability of the semi-aromatic polyamide resin composition in molding can be raised and the creep resistance of a molded product at high temperatures can also be raised.

In the case where the component unit [b] derived from diamines contains both of the component unit (b-1) derived from a straight-chain alkylenediamine having 4 to 18 carbon atoms and the component unit (b-2) derived from a branched alkylenediamine having 4 to 18 carbon atoms, when the content of the component unit (b-1) derived from a straight-chain alkylenediamine having 4 to 18 carbon atoms is 99mol% or lower, remarkable lowering of the melt flowability in molding is hardly caused. Then, when the content of the component unit (b-2) derived from a branched alkylenediamine having 4 to 18 carbon atoms is 50mol% or lower, it becomes difficult for the crystallization rate of the semi-aromatic polyamide resin (A) to be slowed down and it becomes easy for the heat resistance to become sufficient.

Examples of repeating units constituted of the component unit [a] derived from dicarboxylic acids and the component unit [b] derived from diamines include repeating units represented by the following formula [I-a]. In the following formula, $R^1$ is an alkylene group which may have a side chain(s) and has 4 to 18 carbon atoms.

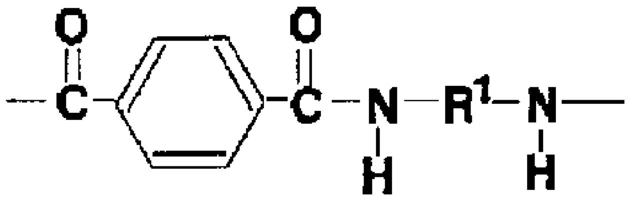

[I-a]

All of repeating units constituting the semi-aromatic polyamide resin (A) are not required to be the repeating unit represented by the above [I-a], and the semi-aromatic polyamide resin (A) may further contain repeating units in which a part of a component unit (a-1) derived from terephthalic acid as described above is replaced by other dicarboxylic acid components.

Examples of the component units derived from dicarboxylic acids other than the terephthalic acid component, as described above, include the component unit (a-2) derived from an aromatic dicarboxylic acid other than terephthalic acid, and the component unit (a-3) derived from an aliphatic dicarboxylic acid.

A repeating unit having the component unit (a-2) derived from an aromatic dicarboxylic acid other than terephthalic acid is preferably a repeating unit having a component unit derived from isophthalic acid, and can be represented by the following formula [1-b]. In the following formula, $R^1$ is the same as described above.

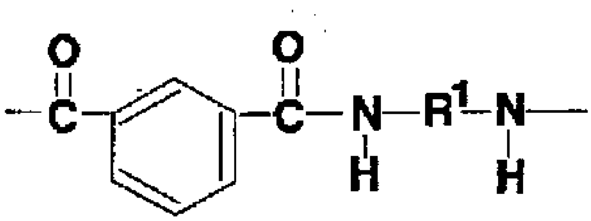

[I-b]

A repeating unit having the component unit (a-3) derived from an aliphatic dicarboxylic acid can be represented by the following formula [II]. In the following formula, $R^1$ is the same as described above, and n indicates usually an integer of 2 to 18, preferably an integer of 4 to 10.

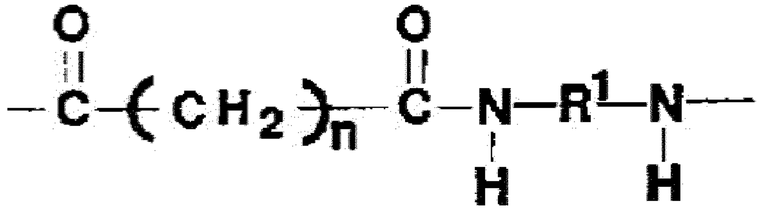

[II]

The repeating units constituting the semi-aromatic polyamide resin (A) have, as the component unit [b] derived

from diamines, the component unit (b-1) derived from a straight-chain alkylenediamine having 4 to 18 carbon atoms and the component unit (b-2) derived from a branched alkylenediamine having 4 to 18 carbon atoms. The repeating unit having the component unit derived from a branched alkylenediamine is preferably a repeating unit having a component unit derived from 2-methyl-1,5-diaminopentane, and can be represented by the following formula [III]. In the following formula, $R^2$ is, on condition that 45 to 100mol% thereof is a p-phenylene group, a divalent hydrocarbon group such as a p-phenylene group, a m-phenylene group or an alkylene group.

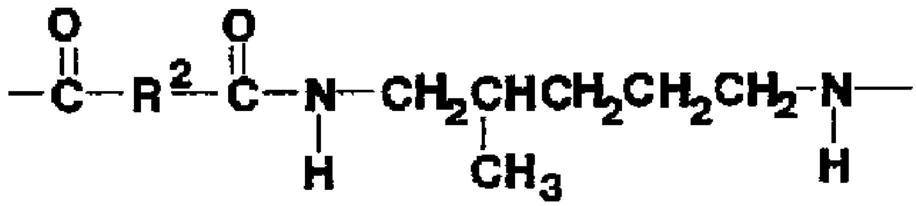

[III]

The limiting viscosity [η] of the semi-aromatic polyamide resin (A) as measured in concentrated sulfuric acid at a temperature of 30°C is usually 0.5 to 3.0 dl/g, preferably 0.5 to 2.8 dl/g and more preferably 0.6 to 2.5 dl/g.

The limiting viscosity [η] of the semi-aromatic polyamide resin (A) can be measured as follows. 0.5 g of the semi-aromatic polyamide resin (A) is dissolved in 50 ml of a 96.5% sulfuric acid solution to make a sample solution. By using an Ubbelohde viscometer, the falling time (s) of the obtained solution under the condition of 25°C ± 0.05°C is measured and the limiting viscosity [η] is calculated based on the following expression.

$$[\eta] = \eta SP/(C^*(1+0.205\eta SP))$$

[η]: limiting viscosity (dl/g)
ηSP: specific viscosity
C: sample concentration (g/dl)
t: falling time of sample solution (s)
t0: falling time of blank sulfuric acid (s)

$$\eta SP=(t-t0)/t0$$

The melting point of the semi-aromatic polyamide resin (A) is, in many cases, not higher than 330°C. That is, the melting point of the semi-aromatic polyamide resin (A) is usually 280 to 330°C and preferably 290 to 305°C. Further, the semi-aromatic polyamide resin (A) is especially excellent in heat resistance and low in water absorption coefficient and low in post-crystallization by annealing of a molded product.

The glass transition temperature of the semi-aromatic polyamide resin (A) is usually 80°C or higher and preferably 90 to 150°C.

Typical examples of the semi-aromatic polyamide resin (A) include the following (PA-i) and (PA-ii).

(PA-i): a polyamide containing a repeating unit of the formula [I-a] and a repeating unit of the formula [III].

Here, $R^2$ in the formula [III] is a p-phenylene group. In this case, the repeating unit of the formula [I-a] is in the range of 5 to 95mol%, preferably 30 to 70mol% and most preferably 40 to 60mol%; the repeating unit of the formula [III] is in the range of 95 to 5mol%, preferably 70 to 30mol% and most preferably 60 to 40mol%.

(PA-ii): a polyamide containing a repeating unit of the formula [I-a], a repeating unit of the formula [I-b] and a repeating unit of the formula [III].

Here, $R^2$ in the formula [III] is a p-phenylene group. In this case, the repeating unit of the formula [I-a] is in the range of 25 to 65mol% and preferably 30 to 50mol%; the repeating unit of the formula [I-b] is in the range of 5 to 30mol% and preferably 10 to 20mol% ; and the repeating unit of the formula [III] is in the range of 30 to 70mol% and preferably 40 to 60mol%.

The semi-aromatic polyamide resin (A) may be of one kind or of two or more kinds. The semi-aromatic polyamide resin (A) may be, for example, a combination of a semi-aromatic polyamide containing, as the component unit [a] derived from a dicarboxylic acid, the component unit (a-1) derived from terephthalic acid and no other component unit (a-2) or (a-3), and a semi-aromatic polyamide resin containing the component unit (a-1) derived from terephthalic acid and another component unit (a-2) or (a-3).

Further, the semi-aromatic polyamide resin (A) may be a combination of a semi-aromatic polyamide (A1) containing, as the component unit [b] derived from a diamine, the component unit (b-1) derived from a straight-chain

alkylenediamine and no component unit (b-2) derived from a branched alkylenediamine, and a semi-aromatic polyamide resin (A2) containing the component unit (b-1) derived from a straight-chain alkylenediamine and the component unit (b-2) derived from a branched alkylenediamine. The content ratio (A2/A1) thereof is not especially limited, and may be, for example, 0/100 to 100/0 (molar ratio) and preferably 50/50 to 100/0 (mass ratio).

The semi-aromatic polyamide resin (A) can be produced by polycondensation of a dicarboxylic acid component and a diamine component. Specifically, the semi-aromatic polyamide resin (A) can be produced by blending a dicarboxylic acid component containing terephthalic acid and a diamine component containing a straight-chain alkylenediamine in an aqueous medium and heating the resultant under pressure in the presence of a catalyst such as sodium hypophosphite to produce a polyamide precursor, and then melt kneading the polyamide precursor. Here, when the polyamide precursor is produced, a molecular weight regulator like benzoic acid can also be included.

1-2. Olefin Polymer (B1)

The olefin polymer (B1) is a relatively low-density olefin polymer (having a lower density than the olefin polymer (B2)). The olefin polymer (B1) is a modified ethylene·$\alpha$-olefin copolymer (B1-1), or a mixture of a modified ethylene·$\alpha$-olefin copolymer (B1-1) and an unmodified ethylene·$\alpha$-olefin copolymer (B1-2).

1-2-1. Modified Ethylene·$\alpha$-Olefin Copolymer (B1-1)

The modified ethylene·$\alpha$-olefin copolymer (B1-1) is an ethylene·$\alpha$-olefin copolymer modified with an unsaturated carboxylic acid or a derivative thereof. That is, the modified ethylene·$\alpha$-olefin copolymer (B1-1) contains a component unit derived from an unsaturated carboxylic acid or a derivative thereof. Since a modified site (component unit derived from an unsaturated carboxylic acid or a derivative thereof) of the modified ethylene·$\alpha$-olefin copolymer (B1-1) easily interacts with molecular terminal groups (for example, amino groups) of the polyamide resin (A), both are good in compatibility.

The component unit derived from an unsaturated carboxylic acid or a derivative thereof has a functional group containing a heteroatom, such as a carboxylic acid group, an ester group, an ether group, an aldehyde group and a ketone group. Among these, the component unit derived from an unsaturated carboxylic acid or a derivative thereof preferably has a carboxylic acid group and more preferably a maleic anhydride group.

The content (amount of modification) of the component unit derived from an unsaturated carboxylic acid or a derivative thereof of the modified ethylene·$\alpha$-olefin copolymer (B1-1) may be set so that the average content (average amount of modification) of the component unit derived from an unsaturated carboxylic acid or a derivative thereof of the olefin polymer (B1) falls within the range described later, and is preferably, for example, 0.05 to 5mass%. When the amount of modification is 0.05mass% or larger, since the copolymer (B1-1) can sufficiently interact with the polyamide resin (A), good compatibility is easily attained; and when 5mass% or smaller, the increase in the melt viscosity due to the interaction becoming excessive can be suppressed. From the similar viewpoint, the amount of modification is, with respect to the modified ethylene·$\alpha$-olefin copolymer (B1-1), preferably 0.1 to 3mass%, more preferably 0.1 to 2mass% and still more preferably 0.3 to 2mass%.

The content of the component unit derived from an unsaturated carboxylic acid or a derivative thereof of the modified ethylene·$\alpha$-olefin copolymer (B1-1) can be calculated from a charging ratio in preparation of the modified ethylene·$\alpha$-olefin copolymer (B1-1) or measured by an NMR method.

In the case of $^1$H-NMR measurement, an ECX400-type nuclear magnetic resonance spectrometer, manufactured by JEOL Ltd., is used, and the measurement conditions are: the solvent: deuterated orthodichlorobenzene; the sample concentration: 20 mg/0.6 mL; the measurement temperature: 120°C; the observation nucleus: $^1$H (400 MHz); the sequence: single pulse; the pulse width: 5.12 $\mu$s (45° pulse); the repeating time: 7.0 s; and the frequency of integration: 500 times or more. With regard to the chemical shift of the reference, hydrogen of tetramethylsilane is taken to be 0 ppm, but besides, also by taking a peak derived from remaining hydrogen of deuterated orthodichlorobenzene to be 10 ppm and using the value as the reference value of the chemical shift, the similar result can be acquired. Peaks of $^1$H and the like derived from functional group-containing compounds can be assigned in the usual way.

In the case of $^{13}$C-NMR measurement, an ECP500-type nuclear magnetic resonance spectrometer, manufactured by JEOL Ltd., is used as a measurement apparatus, and the measurement conditions are: the solvent: a mixed solvent of orthodichlorobenzene/heavy benzene (80/20vol%); the measurement temperature: 120°C; the observation nucleus: $^{13}$C (125 MHz); single pulse proton decoupling; 45° pulse; the repeating time: 5.5 s; the frequency of integration: 10,000 times or more; and the reference value of the chemical shift: 27.50 ppm. The assignment of various signals is carried out in the usual way, and the quantitative determination can be carried out based on the integrated value of the signal intensities.

The density of the modified ethylene·$\alpha$-olefin copolymer (B1-1) is lower than that of the modified ethylene polymer (B2-1). Specifically, the density of the modified ethylene·$\alpha$-olefin copolymer (B1-1) as measured according to

JIS K7112 is preferably 0.80 g/cm$^3$ or higher and lower than 0.89 g/cm$^3$. When the density of the modified ethylene·α-olefin copolymer (B1-1) is 0.80 g/cm$^3$ or higher, the strength of a molded product to be obtained is hardly impaired; when lower than 0.89 g/cm$^3$, suitable flexibility is imparted to a molded product to be obtained and the elongation at break can be raised. The density of the modified ethylene·α-olefin copolymer (B1-1) is, from the similar viewpoint, more preferably 0.83 g/cm$^3$ or higher and lower than 0.89 g/cm$^3$, still more preferably 0.85 g/cm$^3$ or higher and lower than 0.89 g/cm$^3$ and most preferably 0.86 g/cm$^3$ or higher and lower than 0.89 g/cm$^3$. The density can be regulated by regulation of the composition of ethylene and α-olefin, the polymerization temperature, the hydrogen concentration and the like in synthesis of the ethylene·α-olefin copolymer as a raw material.

The melt flow rate (MFR) of the modified ethylene·α-olefin copolymer (B1-1) is preferably higher than that of the modified ethylene polymer (B2-1) described later.

Specifically, the MFR of the modified ethylene·α-olefin copolymer (B1-1) as measured according to ASTM D1238 at 190°C and a load of 2.16 kg is 0.01 to 20 g/10 min and preferably 0.05 to 20 g/10 min.

The modified ethylene·α-olefin copolymer (B1-1) can be obtained, as described above, by graft modifying an ethylene·α-olefin copolymer as a raw material with an unsaturated carboxylic acid or a derivative thereof.

(Ethylene·α-olefin copolymer)

The ethylene·α-olefin copolymer as a raw material is a copolymer of ethylene and an α-olefin having 3 to 20 carbon atoms. The content of a component unit derived from ethylene in the ethylene·α-olefin copolymer is 70 to 99.5mol% and preferably 80 to 99mol%.

Examples of the α-olefin include propylene, 1-butene, 1-pentene, 1-hexene, 4-methyl-1-pentene, 1-octene and 1-decene. Among these, preferable are propylene, 1-butene, 1-hexene, 4-methyl-1-pentene and 1-octene. These α-olefins can be used singly or in a combination of two or more. The content of a component unit derived from the α-olefin in the ethylene·α-olefin copolymer is 0.5 to 30mol% and preferably 1 to 20mol%.

(Unsaturated carboxylic acid or derivative thereof)

Examples of the unsaturated carboxylic acid include acrylic acid, methacrylic acid, maleic acid, fumaric acid and itaconic acid. Examples of the derivative of the unsaturated carboxylic acid include acid anhydrides, esters, amides, imides and metal salts, and specifically include maleic anhydride, itaconic anhydride, citraconic anhydride, methyl acrylate, methyl methacrylate, ethyl acrylate, ethyl methacrylate, glycidyl acrylate, maleic acid monoethyl ester, maleic acid diethyl ester, fumaric acid monomethyl ester, fumaric acid dimethyl ester, itaconic acid monomethyl ester, itaconic acid diethyl ester, acrylamide, methacrylamide, maleic acid monoamide, maleic acid diamide, maleic acid-N-monoethylamide, maleic acid-N,N-diethylamide, maleic acid-N-monobutylamide, maleic acid-N,N-dibutylamide, fumaric acid monoamide, fumaric acid diamide, fumaric acid-N-monobutylamide, fumaric acid-N,N-dibutylamide, maleimide, N-butylmaleimide, N-phenylmaleimide, sodium acrylate, sodium methacrylate, potassium acrylate and potassium methacrylate. Among these, maleic anhydride is most preferable.

(Graft-modification)

The graft-modification can be carried out by conventionally known various methods. The graft-modification may be carried out, for example, by a melt modification method in which the ethylene·α-olefin copolymer is melted by using an extruder and a graft monomer is added for graft-copolymerization, or by a solution modification method in which the ethylene·α-olefin copolymer is dissolved in a solvent and a graft monomer is added for graft-copolymerization. In either case, in order to efficiently graft-copolymerizing the graft monomer, it is preferable to carry out the reaction in the presence of a radical initiator.

Examples of the radical initiator include organic peroxides and organic peresters, and specifically include organic peroxides such as benzoyl peroxide, dichlorobenzoyl peroxide, dicumyl peroxide, di-tert-butyl peroxide, 2,5-dimethyl-2,5-di(peroxide benzoate)hexyne-3, 1,4-bis(tert-butylperoxyisopropyl)benzene and lauroyl peroxide; organic peresters such as tert-butyl peracetate, 2,5-dimethyl-2,5-di(tert-butylperoxy)hexyne-3, 2,5-dimethyl-2,5-di(tert-butylperoxy)hexane, tert-butyl perbenzoate, tert-butyl perphenylacetate, tert-butyl perisobutyrate, tert-butyl per-sec-octoate, tert-butyl perpivalate, cumyl perpivalate and tert-butyl perdiethylacetate; and azo compounds such as azoisobutyronitrile and dimethyl azoisobutyrate. Among these, preferable are dialkyl peroxides such as dicumyl peroxide, di-tert-butyl peroxide, 2,5-dimethyl-2,5-di(peroxybenzoate)hexyne-3, 2,5-dimethyl-2,5-di(tert-butylperoxy)hexane and 1,4-bis(tert-butylperoxyisopropyl)benzene. The radical initiator is used usually in a proportion of 0.001 to 1 part by mass with respect to 100 parts by mass of the ethylene·α-olefin copolymer as a raw material.

1-2-2. Unmodified Ethylene·α-Olefin Copolymer (B1-2)

The unmodified ethylene·α-olefin copolymer (B1-2) is an ethylene·α-olefin copolymer which has not been graft-modified. The unmodified ethylene·α-olefin copolymer (B1-2) can impart good melt flowability to the semi-aromatic polyamide resin composition. In particular, although use of the modified ethylene·α-olefin copolymer (B1-1) alone is liable to lower the melt flowability, the further combination with the unmodified ethylene·α-olefin copolymer (B1-2) can raise the melt flowability.

The density of the unmodified ethylene·α-olefin copolymer (B1-2) is lower than that of the unmodified ethylene polymer (B2-2), and may specifically be in a similar range to that of the density of the modified ethylene·α-olefin copolymer (B1-1).

The unmodified ethylene·α-olefin copolymer (B1-2) is appropriate if it has such a density, and is not especially limited, and may be similar to the ethylene·α-olefin copolymer to be used as a raw material of the modified ethylene·α-olefin copolymer (B1-1). More specifically, the composition, the density and the melt flow rate of the unmodified ethylene·α-olefin copolymer (B1-2) may be in the similar ranges to those of the composition, the density and the melt flow rate of the ethylene·α-olefin copolymer as a raw material of the modified ethylene·α-olefin copolymer (B1-1). The unmodified ethylene·α-olefin copolymer (B1-2) may be the same as the ethylene·α-olefin copolymer as a raw material of the modified ethylene·α-olefin copolymer (B1-1), or may be different therefrom.

1-2-3. Physical Properties

The average content (average amount of modification) of the component unit derived from an unsaturated carboxylic acid or a derivative thereof of the olefin polymer (B1) is preferably 0.01 to 5mass%. When the average content is 0.01mass% or higher, the dispersibility to the semi-aromatic polyamide resin (A) is easily raised; when 5mass% or lower, since the interaction between the olefin polymer (B1) and the semi-aromatic polyamide resin (A) does not become too strong, the moldability is hardly impaired. The average content of the component unit derived from an unsaturated carboxylic acid or a derivative thereof of the olefin polymer (B1) is, from the similar viewpoint, 0.05 to 5mass%, preferably 0.10 to 3mass%, more preferably 0.10 to 2mass% and most preferably 0.30 to 2.0mass%.

More specifically, a functional group derived from an unsaturated carboxylic acid or a derivative thereof of the olefin polymer (B 1) reacts or interacts with a terminal group of the semi-aromatic polyamide resin (A). Hence, when the average content of the component unit having the functional group of the olefin polymer (B 1) is not lower than a certain content, the semi-aromatic polyamide resin (A) and the olefin polymer (B 1) are bonded or interact, thereby making it easy for the toughness of a molded product to be obtained to be raised. Here, by making the average content of the component unit having the functional group to be 5mass% or lower, it can be made difficult for the melt flowability of the resin composition to be impaired.

The average content of the component unit derived from an unsaturated carboxylic acid or a derivative thereof of the olefin polymer (B 1) may be determined by a measurement, or may be calculated from the composition of the olefin polymer (B 1) to be used for preparation of the resin composition.

The average content of the component unit derived from an unsaturated carboxylic acid or a derivative thereof of the olefin polymer (B 1) can be measured, for example, by an NMR method. The measurement conditions can be the same as those in Examples described later.

When the content (amount of modification) of the component unit derived from an unsaturated carboxylic acid or the like of the modified or unmodified ethylene·α-olefin copolymer constituting the olefin polymer (B 1) is taken to be xi (mass%) and the content of the modified or unmodified ethylene·α-olefin copolymer in the olefin polymer (B 1) is taken to be Mi (parts by mass) (i is an integer of 2 or more), the average content of the component unit derived from an unsaturated carboxylic acid or a derivative thereof of the olefin polymer (B 1) can be determined from the following expression (1).

$$\text{Expression (1): Average content (average amount of modification) (mass\%)} = (\Sigma xi*Mi/\Sigma Mi) \times 100$$

For example, in the case where the olefin polymer (B1) contains M1 (parts by mass) of the modified ethylene·α-olefin copolymer (B1-1)(the content of the component unit derived from an unsaturated carboxylic acid: x1 (mass%)) and M2 (parts by mass) of the unmodified ethylene·α-olefin copolymer (B1-2)(the content of the component unit derived from an unsaturated carboxylic acid: x2 (mass%)), the average content (average amount of modification) of the component unit derived from an unsaturated carboxylic acid of the olefin polymer (B1) can be determined as an average content (average amount of modification) = {(x1*M1+x2*M2)/(M1+M2)} × 100. Here, in the case where the olefin polymer (B1)

is composed of only one kind of the modified ethylene·α-olefin copolymer, the average amount of modification of the olefin polymer (B1) becomes the same as that of the modified ethylene·α-olefin copolymer.

The average content of the component unit derived from an unsaturated carboxylic acid or a derivative thereof of the olefin polymer (B1) can be regulated by regulation of the content of the component unit derived from an unsaturated carboxylic acid or a derivative thereof of the modified ethylene·α-olefin copolymer (B1-1), the content ratio of the modified ethylene·α-olefin copolymer (B1-1) and unmodified ethylene·α-olefin copolymer (B1-2), and the like.

The average density of the olefin polymer (B1) is lower than that of the olefin polymer (B2). Specifically, the average density of the olefin polymer (B1) is, as described above, preferably 0.80 g/cm$^3$ or higher and lower than 0.89 g/cm$^3$, more preferably 0.83 g/cm$^3$ or higher and lower than 0.89 g/cm$^3$, still more preferably 0.85 g/cm$^3$ or higher and lower than 0.89 g/cm$^3$ and most preferably 0.86 g/cm$^3$ or higher and lower than 0.89 g/cm$^3$.

The average density of the olefin polymer (B1) may be calculated based on the following expression, or can also be measured.

When the density of the modified or unmodified ethylene·α-olefin copolymer constituting the olefin polymer (B 1) is taken to be di (g/cm$^3$) and the content of the modified or unmodified ethylene·α-olefin copolymer in the olefin polymer (B 1) is taken to be Mi (parts by mass) (i is an integer of 2 or more), the average density can be determined from the following expression (2).

$$\text{Expression (2): Average density (g/cm}^3\text{)} = \Sigma Mi/\Sigma(Mi/di)$$

(di: a density of each polymer, Mi: a content (parts by mass) of each polymer, i: a number assigned to each polymer)

1-3. Olefin Polymer (B2)

The olefin polymer (B2) is a relatively high-density olefin polymer (having a higher density than the olefin polymer (B1)). The olefin polymer (B2) is a modified ethylene polymer (B2-1), an unmodified ethylene polymer (B2-2), or a mixture thereof.

It is preferable that among these, the olefin polymer (B2) contains the modified ethylene polymer (B2-1), from the viewpoint of raising the compatibility with the semi-aromatic polyamide resin (A) and the olefin polymer (B1), and other viewpoints.

1-3-1. Modified Ethylene Polymer (B2-1)

The modified ethylene polymer (B2-1) is an ethylene polymer graft-modified with an unsaturated carboxylic acid or a derivative thereof. That is, the modified ethylene polymer (B2-1) contains a component unit derived from an unsaturated carboxylic acid or a derivative thereof.

The content (amount of modification) of the component unit derived from an unsaturated carboxylic acid or a derivative thereof of the modified ethylene polymer (B2-1) may be in such a degree that the average content (average amount of modification) of the component unit derived from an unsaturated carboxylic acid or a derivative thereof of the olefin polymer (B2) falls within the range described later, and may be, for example, 0 to 5mass%, preferably 0.10 to 3mass%, more preferably 0.10 to 2mass% and most preferably 0.30 to 1.5mass%.

The density of the modified ethylene polymer (B2-1) is higher than that of the modified ethylene·α-olefin copolymer (B1-1). Specifically, the density of the modified ethylene polymer (B2-1) is preferably 0.89 to 0.97 g/cm$^3$. When the density of the modified ethylene polymer (B2-1) is 0.89 g/cm$^3$ or higher, the strength of a molded product to be obtained is easily raised; when 0.97 g/cm$^3$ or lower, the elongation at break of a molded product to be obtained is hardly impaired. The density of the modified ethylene polymer (B2-1) is, from the similar viewpoint, preferably 0.89 to 0.96 g/cm$^3$, more preferably 0.91 to 0.96 g/cm$^3$ and still more preferably 0.91 to 0.95 g/cm$^3$. The density of the modified ethylene polymer (B2-1) can be measured or calculated by the same method as for the density of the olefin polymer (B1).

The melting point of the modified ethylene polymer (B2-1) is higher than that of the modified ethylene·α-olefin copolymer (B1-1). Specifically, the temperature (melting point: Tm) at the maximum peak position of an endothermic curve measured by differential scanning colorimetry (DSC) of the modified ethylene polymer (B2-1) is 90 to 127°C and preferably 95 to 125°C. In the case where the modified ethylene polymer (B2-1) is a modified ethylene·α-olefin copolymer, the melting point can be regulated, for example, by regulation of the composition of ethylene and α-olefin, the kind of catalyst, the polymerization temperature and the like in synthesis of the ethylene·α-olefin copolymer as a raw material.

The MRF of the modified ethylene polymer (B2-1) is lower than that of the modified ethylene·α-olefin copolymer (B1-1). Specifically, the MRF of the modified ethylene·polymer (B2-1) as measured according to ASTM D1238 at 190°C and a load of 2.16 kg is usually 0.01 to 100 g/10 min, preferably 0.1 to 50 g/10 min and more preferably 0.2 to 20 g/10 min.

The modified ethylene polymer (B2-1) may be a modified ethylene homopolymer, or may be a modified ethylene·α-olefin copolymer. It is preferable that among these, the modified ethylene polymer (B2-1) is a modified ethylene·α-olefin copolymer, from the viewpoint that the compatibility with the olefin polymer (B 1) is easily attained.

The modified ethylene·α-olefin copolymer (modified ethylene polymer (B2-1)) can be obtained, as described above, by graft-modifying an ethylene·α-olefin copolymer with an unsaturated carboxylic acid or a derivative thereof.

(Ethylene·α-olefin copolymer)

The ethylene·α-olefin copolymer as a raw material is a copolymer of ethylene and an α-olefin having 3 to 20 carbon atoms.

The content of a component unit derived from ethylene in the ethylene·α-olefin copolymer is 70mol% or higher and preferably 80 to 98mol%. The content of a component unit derived from the α-olefin is 0.5 to 30mol% and preferably 2 to 20mol%.

The density, the melting point and the MRF of the ethylene·α-olefin copolymer are in similar ranges to those of the density, the melting point and the MRF of the modified ethylene·α-olefin copolymer.

(Unsaturated carboxylic acid or derivative thereof)

The unsaturated carboxylic acid or the derivative thereof are similar as described above.

1-3-2. Unmodified Ethylene Polymer (B2-2)

The unmodified ethylene polymer (B2-2) is an ethylene polymer not having been graft-modified. The unmodified ethylene polymer (B2-2) can impart good melt flowability to the semi-aromatic polyamide resin composition.

The density of the unmodified ethylene polymer (B2-2) is higher than that of the unmodified ethylene·α-olefin copolymer (B 1-2), and may be in a similar range to that of the density of the modified ethylene polymer (B2-1).

The unmodified ethylene polymer (B2-2) is appropriate if it has such a density, and is not especially limited, and may be similar to, for example, the ethylene polymer to be used as a raw material of the modified ethylene polymer (B2-1). More specifically, the composition, the density and the melt flow rate of the unmodified ethylene polymer (B2-2) may be in the similar ranges to those of the composition, the density and the melt flow rate of the ethylene polymer as a raw material of the modified ethylene polymer (B2-1). The unmodified ethylene polymer (B2-2) may be the same as the ethylene polymer as a raw material of the modified ethylene polymer (B2-1), or may be different therefrom.

The unmodified ethylene polymer (B2-2) may be an unmodified ethylene homopolymer, or may be an unmodified ethylene·α-olefin copolymer, and it is preferable that the unmodified ethylene polymer (B2-2) is an unmodified ethylene·α-olefin copolymer, from the viewpoint that the compatibility with the olefin polymer (B1) is easily attained.

1-3-3. Physical Properties

The average content of the component unit derived from an unsaturated carboxylic acid or a derivative thereof of the olefin polymer (B2) may be 0 to 5mass%. When the average content is 5mass% or lower, since the interaction between the olefin polymer (B1) and the semi-aromatic polyamide resin (A) does not become too strong, the moldability is hardly impaired. The average content is, from the viewpoint of further enhancing the dispersibility, more preferably 0.01 to 5mass%. The average content, as described above, can be determined from the expression (1).

The average content of the component unit derived from an unsaturated carboxylic acid or a derivative thereof of the olefin polymer (B2) can be regulated by regulation of the amount of modification of the modified ethylene polymer (B2-1), the content ratio of the modified ethylene polymer (B2-1) and the unmodified ethylene polymer (B2-2), and the like. The average content of the component unit derived from an unsaturated carboxylic acid or a derivative thereof of the olefin polymer (B2) can be measured or calculated by the same method as for the average content of the component unit derived from an unsaturated carboxylic acid or a derivative thereof of the olefin polymer (B1).

The content mass ratio of (B 1) and (B2):

The content mass ratio (B1/B2) of the olefin polymer (B1) and the olefin polymer (B2) preferably satisfies $0.5 \leq B1/B2 \leq 500$. When B1/B2 is 0.5 or higher, suitable flexibility can be imparted to a molded product and the elongation at break can be raised (without impairing the strength of the molded product). When B1/B2 is 500 or lower, the strength of a molded product is hardly impaired. From the similar viewpoint, the ratio more preferably satisfies $0.5 \leq B1/B2 \leq 99$, still more preferably $0.6 \leq B1/B2 \leq 10$, still more preferably $1 \leq B1/B2 \leq 10$ and most preferably $2 \leq B1/B2 \leq 9$.

The average density of the olefin polymer (B2) is higher than that of the olefin polymer (B1). Specifically, the average density of the olefin polymer (B2) is preferably 0.89 to 0.97 g/cm$^3$, more preferably 0.89 to 0.96 g/cm$^3$, still more preferably 0.91 to 0.96 g/cm$^3$ and most preferably 0.91 to 0.95 g/cm$^3$. The average density of the olefin polymer (B2) can be measured or calculated by the same method as for the average density of the olefin polymer (B 1).

When the average density of the polymers constituting the olefin polymer (B1) is taken to be d1, and the average density of the polymers constituting the olefin polymer (B2) is taken to be d2, the difference (d2-d1) in average density is preferably 0.015 $g/cm^3$ or larger. When the difference (d2-d1) in average density is 0.015 $g/cm^3$ or larger, the elongation at break of a molded product to be obtained is more easily raised. The upper limit of the difference (d2-d1) in average density is not especially limited, and is, for example, 1.50 $g/cm^3$. From the similar viewpoint, the difference (d2-d1) in average density is more preferably 0.03 $g/cm^3$ or larger, still more preferably 0.05 $g/cm^3$ or larger and most preferably 0.06 $g/cm^3$ or larger.

1-4. Other Components

The semi-aromatic polyamide resin composition of the present invention may further contain other components other than the above components in the range of not impairing the advantageous effects of the present invention. Examples of the other components include additives such as inorganic fillers, organic fillers, organic flame retardants, antioxidants (heat-resistant stabilizers), thermal stabilizers, weather-resistant stabilizers, antistatic agents, slip inhibitors, antiblocking agents, antifogging agent, lubricants, pigments, dyes, natural oils, synthetic oils and waxes. Other heat-resistant resins may further be contained.

[Inorganic filler (C)]

The inorganic filler (C) may be one having a fibrous, powdery, granular, plate, needle, cloth, or mat shape.
Examples of the fibrous inorganic filler include glass fibers, carbon fibers, asbestos fibers and boron fibers. Among these, glass fibers are especially preferable. By using glass fibers, the moldability is improved and there are improved the mechanical properties such as the strength (elastic modulus) and the heat-resistant properties such as the heat distortion temperature of a molded product containing the inorganic filler.
The average length of the fibrous inorganic filler is usually in the range of 0.1 to 20 mm, and preferably 0.3 to 6 mm; the aspect ratio is usually in the range of 10 to 2,000 and preferably 30 to 600. It is preferable to use the fibrous inorganic filler having the average length and the aspect ratio in such ranges.
Besides the fibrous inorganic filler, there can be used other fillers having a powdery, granular, plate, needle, cloth or mat shape. Examples of such other fillers include powdery or plate-shape inorganic compounds such as silica, silica alumina, alumina, calcium carbonate, titanium dioxide, talc, wollastonite, diatomaceous earth, clay, kaolin, spherical glass, mica, gypsum, rouge, magnesium oxide and zinc oxide, and needle-shape inorganic compounds such as potassium titanate. These fillers can also be used as a mixture of two or more.
The average particle diameter of the other fillers is usually in the range of 0.1 to 200 μm and preferably 1 to 100 μm.
The fibrous fillers and other fillers may also be used by being treated with a silane coupling agent or a titanium coupling agent.
It is preferable that the inorganic filler (C) contains at least one of the fibrous filler and the other filler, and it is more preferable that the inorganic filler (C) contains at least one of the fibrous filler and talc.

[Organic filler (D)]

Examples of the organic filler (D) include wholly aromatic polyaimdes such as polyparaphenylene terephthalamide, polymetaphenylene terephthalamide, polyparaphenylene isophthalamide, polymetaphenylene isophthalamide, condensates of diaminodiphenyl ether with terephthalic acid (isophthalic acid) and condensates of para(meta)aminobenzoic acid; wholly aromatic polyamideimides such as condensates of diaminodiphenyl ether with trimellitic anhydride or pyromellitic anhydride; wholly aromatic polyesters; wholly aromatic polyimides; heterocycle-containing compounds such as polybenzimidazole and polyimidazophenanthroline; and secondarily processed products such as powdery, plate, fibrous or cloth shape materials formed of polytetrafluoroethylene and the like.

[Organic flame retardant (E)]

There can be included an organic flame retardant (E) such as a poly-brominated styrene produced from a brominated styrene monomer and having, as a main constituent, a component unit represented by the following formula [IV], bromides of polyethylene ether, and bromides of polystyrene. In the following formula, m is the number of 1 or more and 5 or less.

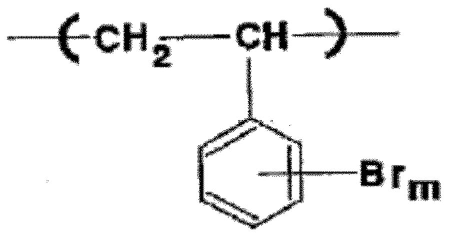

[IV]

The poly-brominated styrene is preferably one containing 60wt% or more of a dibrominated styrene unit, and especially preferably one containing 70wt% or more thereof. The poly-brominated styrene may also be one in which 40wt% or less, preferably 30wt% or less of monobrominated styrene and/or tribrominated styrene other than dibrominated styrene is copolymerized.

In the semi-aromatic polyamide resin composition of the present invention, in addition to the above organic flame retardant, there can be used at least one flame retardant aid selected from antimony oxide, soda antimonate, tin oxide, iron oxide, zinc oxide and zinc nitrate. Especially preferable is soda antimonite, particularly a substantially anhydrous soda antimonite heat-treated at a high temperature of 550°C or higher.

[Antioxidant (F)]

Examples of the antioxidant (F) include phosphorus-based antioxidants, phenolic antioxidants, amine-based antioxidants and sulfur-based antioxidants.

Examples of the phosphorus-based antioxidant include 9,10-dihydro-9-oxa-10-phosphaphenanthrene-10-oxide, triphenyl phosphite, 2-ethylhexyl acid phosphate, dilauryl phosphite, tri-iso-octyl phosphite, tris(2,4-di-tert-butylphenyl) phosphite, trilauryl phosphite, trilauryl-di-thiophosphite, trilauryl-tri-thiophosphite, trisnonylphenyl phosphite, distearyl pentaerythritol diphosphite, tris(monononylphenyl) phosphite, tris(dinonylphenyl) phosphite, trioctadecyl phosphite, 1,1,3-tris(2-methyl-di-tridecyl phosphite-5-tert-butylphenyl)butane, 4,4'-butylidene-bis(3-methyl-6-tert-butyl)tridecyl phosphite, 4,4'-butylidene-bis(3-methyl-6-tert-butyl-di-tridecyl) phosphite, bis(2,4-di-tert-butylphenyl)pentaerythritol-di-phosphite, bis(2,6-di-tert-butyl-4-methylphenyl)pentaerythritol-di-phosphite, tetrakis(2,4-di-tert-butylphenyl) 4,4'-bisphenylene phosphite, distearyl pentaerythritol diphosphite, tridecyl phosphite, tristearyl phosphite, 2,2'-methylenebis(4,6-di-tert-butylphenyl)octyl phosphite, sorbit-tris-phosphite-distearyl-mono-C30-diol ester and bis(2,4,6-tri-tert-butylphenyl)pentaerythritol diphosphate. Among these, phosphorus-based antioxidants of pentaerythritol-di-phosphites such as bis(2,4-di-tert-butylphenyl)pentaerythritol-di-phosphite and bis(2,6-di-tert-butyl-4-methylphenyl)pentaerythritol-di-phosphite, and tetrakis(2,4-di-tert-butylphenyl) 4,4'-bisphenylene diphosphate are preferable.

Examples of the phenolic antioxidant include 3,9-bis{2-[3-(3-tert-butyl-4-hydroxy-5-methylphenyl)propionyl]-1,1-dimethylethyl}-2,4,8,10-tetraoxaspiro[5,5]undecane, 2,6-di-tert-butyl-p-cresol, 2,4,6-tri-tert-butylphenol, n-octadecyl-3-(4'-hydroxy-3',5'-di-tert-butylphenol) propionate, styrenated phenol, 4-hydroxy-methyl-2,6-di-tert-butylphenol, 2,5-di-tert-butyl-hydroquinone, cyclohexylphenol, butylhydroxyanisole, 2,2'-methylene-bis-(4-methyl-6-tert-butylphenol), 2,2'-methylene-bis-(4-ethyl-6-tert-butylphenol), 4,4'-isopropylidenebisphenol, 4,4'-butylidene-bis(3-methyl-6-tert-butylphenol), 1,1-bis-(4-hydroxy-phenyl)cyclohexane, 4,4'-methylene-bis-(2,6-di-tert-butylphenol), 2,6-bis(2'-hydroxy-3'-tert-butyl-5'-methylmethylbenzyl) 4-methyl-phenol, 1,1,3-tris(2-methyl-4-hydroxy-5-tert-butyl-phenyl)butane, 1,3,5-tris-methyl-2,4,6-tris(3,5-di-tert-butyl-4-hydroxy-benzyl)benzene, tetrakis[methylene-3-(3,5-di-tert-butyl-4-hydroxyphenyl)propionate]methane, tris(3,5-di-tert-butyl-4-hydroxyphenyl) isocyanurate, tris[β-(3,5-di-tert-butyl-4-hydroxyphenyl)propionyl-oxyethyl] isocyanate, 4,4'-thiobis(3-methyl-6-tert-butylphenol), 2,2'-thiobis(4-methyl-6-tert-butylphenol), 4,4'-thiobis(2-methyl-6-tert-butylphenol) and N,N'-hexamethylene bis(3,5-di-tert-butylphenol-4-hydroxycinnamamide).

Examples of the amine-based antioxidant include 4,4'-bis(α,α-dimethylbenzyl)diphenylamine, phenyl-α-naphthylamine, phenyl-β-naphthylamine, N,N'-diphenyl-p-phenylenediamine, N,N'-di-β-naphthyl-p-phenylenediamine, N-cyclohexyl-N'-phenyl-p-phenylenediamine, N-phenyl-N'-isopropyl-p-phenylenediamine, aldol-α-naphthylamine, polymers of 2,2,4-trimethyl-1,2-dihydoquinone, and 6-ethoxy-2,2,4-trimethyl-1,2-dihydroquinoline.

Examples of the sulfur-based antioxidant include thiobis(β-naphthol), thiobis(N-phenyl-β-naphthylamine), 2-mercaptobenzothiazole, 2-mercaptobenzimidazole, dodecyl mercaptan, tetramethylthiuram monosulfide, tetramethylthiuram disulfide, nickel dibutyldithiocarbamate, nickel isopropylxanthate, dilauryl thiodipropionate and distearyl thiodipropionate.

[Other heat-resistant resin (G)]

Examples of the other heat-resistant resin (G) include PPS (polyphenylene sulfide), PPE (polyphenyl ether), PES (polyether sulfone), PEI (polyether imide), LCP (liquid crystal polymer) and modified resins of thereof. Polyphenylene

sulfide is especially preferable.

1-5. Composition of Semi-Aromatic Polyamide Resin Composition

In the semi-aromatic polyamide resin composition of the present invention, the content of the semi-aromatic polyamide resin (A) is, with respect to 100 parts by mass of the total of (A), (B1) and (B2), preferably 65 to 90 parts by mass, more preferably 70 to 85 parts by mass, still more preferably 73 to 83 parts by mass and most preferably 73 to 80 parts by mass. When the content of the semi-aromatic polyamide resin (A) is not lower than a certain content, the strength and the heat resistance of a molded product are easily raised; and when not higher than a certain content, the strength and the heat resistance of a molded product are hardly impaired.
In the semi-aromatic polyamide resin composition of the present invention, the total content of the olefin polymer (B1) and the olefin polymer (B2) is, with respect to 100 parts by mass of the total of (A), (B1) and (B2), preferably 10 to 30 parts by mass, more preferably 15 to 30 parts by mass, still more preferably 17 to 27 parts by mass and most preferably 20 to 27 parts by mass. When the content of the olefin polymer (B1) is not lower than a certain content, the elongation at break of a molded product to be obtained is easily raised; and when not higher than a certain content, the strength of a molded product is hardly impaired.
The semi-aromatic polyamide resin composition of the present invention, as described above, may further contain the inorganic filler (C) and the antioxidant (F).
In the semi-aromatic polyamide resin composition of the present invention, the content of the inorganic filler (C) is, with respect to 100 parts by mass of the total of (A), (B1) and (B2), 0 to 200 parts by mass, preferably 0.01 to 100 parts by mass and more preferably 1 to 50 parts by mass. When the content of the inorganic filler (C) is not lower than a certain content, the strength of a molded product is easily raised; and when not higher than a certain content, the melt flowability of the resin composition is hardly impaired.
In the semi-aromatic polyamide resin composition of the present invention, the content of the antioxidant (F) is, with respect to 100 parts by mass of the total of (A), (B1) and (B2), 0 to 2 parts by mass, preferably 0.1 to 5 parts by mass and more preferably 0.1 to 1.0 part by mass. When the content of the antioxidant (F) is not lower than a certain content, the thermal degradation and the like of a molded product are easily suppressed; and when not higher than a certain content, the coloration and the like are hardly generated.

1-6. Production Method of Semi-Aromatic Polyamide Resin Composition

The semi-aromatic polyamide resin composition of the present invention can be produced by an optional method. The semi-aromatic polyamide resin composition of the present invention can be produced, for example, through a step of preparing the olefin polymer (B1) and the olefin polymer (B2), a step of melt kneading the olefin polymer (B1) and olefin polymer (B2) prepared with the semi-aromatic polyamide resin (A), and as required, a step of granulating or crushing the resultant.
Before the step of melt kneading, there may further be carried out a step of mixing, at least, the semi-aromatic polyamide resin (A), the olefin polymer (B1) and the olefin polymer (B2). A mixing method may use, for example, a Henschel mixer, a V blender, a ribbon blender, or a tumbler blender.
Alternatively, the semi-aromatic polyamide resin composition of the present invention can also be produced through a step of simultaneously melt kneading each polymer constituting the olefin polymer (B1) and the olefin polymer (B2) with the semi-aromatic polyamide resin (A).

2. Molded Product

The molded product of the present invention includes the semi-aromatic polyamide resin composition of the present invention.
More specifically, by using the semi-aromatic polyamide resin composition prepared as described above, a molded product having a desired shape can be produced by a usual melt molding method, for example, a compression molding method, an injection molding method or an extrusion method.
A molded product can be produced, for example, by placing the semi-aromatic polyamide resin composition of the present invention in an injection molding machine regulated at a cylinder temperature of about 350 to 300°C to put the composition in a melt state, and introducing the resultant into a metal mold of a predetermined shape.
The shape of a molded product produced by using the semi-aromatic polyamide resin composition of the present invention is not especially limited, and can take any various shapes according to applications.
The polyamide resin composition of the present invention is suitable also as a resin for forming various types of molded products, preferably automotive interior and exterior parts, parts in engine rooms and automotive electric parts. Examples of molded products obtained from the semi-aromatic polyamide resin composition of the present invention include automotive exterior parts such as radiator grilles, rear spoilers, wheel covers, wheel caps, cowl vent grilles, air outlet louvers, air scoops, hood bulges, fenders and back doors; parts in automotive engine rooms, such as cylinder-head covers, engine mounts, air intake manifolds, throttle bodies, air intake pipes, radiator tanks, radiator supports, water pump inlets, water pump outlets, thermostat housings, cooling fans, fan shrouds, oil pans, oil filter housings, oil filler caps, oil level gauges, timing belts, timing belt covers and engine covers; automotive fuel system parts such as fuel caps, fuel filler tubes, automotive fuel tanks, fuel sender modules, fuel cutoff valves, quick connectors, canisters, fuel delivery pipes and fuel filler necks; automotive drive line parts such as shift lever housings and propeller shafts; automotive chassis parts such as stabilizer bar linkage rods; automotive functional parts such as window regulators, door locks, door handles, outside door mirror stays, accelerator pedals, pedal modules, seal rings, bearings, bearing retainers, gears and actuators; automotive electronics parts such as wire harness connectors, relay blocks, sensor housings, encapsulations, and ignition coil and distributor caps; fuel system parts for general purpose apparatuses such as fuel tanks for general purpose apparatuses (brush cutters, lawn mowers, chain saws and the like); and electric and electronic parts such as connectors and LED reflectors, building material parts, various types of housings, and exterior parts.

The molded products of the semi-aromatic polyamide resin composition of the present invention exhibit good strength and elongation at break. Therefore, the molded products are suitable for automotive fuel tanks, quick connectors, bearing retainers, fuel tanks for general purpose apparatuses, fuel caps, fuel filler necks, fuel sender modules, wheel caps, fenders or back doors, various types of housings, exterior parts, and the like. The various types of housings and the exterior parts include small-size housings, exterior molded articles and housings for cell phones, and they can preferably be used particularly as housings for cell phones. Further, the semi-aromatic polyamide resin composition of the present invention is preferably used also as a resin for production of connectors to mutually connect electronic circuits.

Examples

Hereinafter, the present invention will be described further specifically by reference to Examples, but the scope of the present invention is not limited to the descriptions of Examples.

1.Component Materials

1-1. Semi-Aromatic Polyamide Resin (A)

<Preparation of a semi-aromatic polyamide (PA-1)>

2,800 g (24.1 mol) of 1,6-diaminohexane, 2,184 g (13.2 mol) of terephthalic acid, 1,572 g (10.8 mol) of adipic acid, 5.67 g ($3.35 \times 10^{-3}$ mol) of sodium hypophosphite as a catalyst, 36.5 g (00.30 mol) of benzoic acid as a molecular weight regulator, and 409 ml of ion-exchange water were charged in a 13.6 L-inner volume autoclave, which was then purged with nitrogen. Stirring was started at 190°C and the inner temperature was raised over 3 hours up to 250°C. Then, the inner pressure of the autoclave was raised up to 3.02 MPa. The reaction was continued as it was for 1 hour, and thereafter, a low-order condensate was atmospherically discharged for extraction from a spray nozzle installed on a lower part of the autoclave. Thereafter, the low-order condensate was cooled to room temperature, thereafter crushed to a particle size of 1.5 mm or smaller by a crushing machine, and dried at 110°C for 24 hours. The low-order condensate obtained had a moisture content of 3,000 ppm and a limiting viscosity [$\eta$] of 0.15 dl/g, and 5,440 g thereof as a polyamide precursor was obtained.

Then, the polyamide precursor was dried and melt polymerized by using a twin-screw extruder at a cylinder temperature set at 330°C to thereby obtain a semi-aromatic polyamide (PA-1).

The composition of the semi-aromatic polyamide (PA-1) obtained was as follows: the content of a component unit derived from terephthalic acid derived was 55mol%, and the content of a component unit derived from adipic acid was 45mol% in component units derived from dicarboxylic acids; and the content of a component unit derived from 1,6-diaminohexane was 100mol% in component units derived from diamines. The limiting viscosity [$\eta$] of the semi-aromatic polyamide (PA-1) was 1.0 dl/g, and the melting point Tm thereof was 310°C.

<Preparation of a semi-aromatic polyamide (PA-2)>

2,800 g (24.1 mol) of 1,6-hexanediamine, 2,780 g (16.7 mol) of terephthalic acid, 1,190 g (7.17 mol) of isophthalic acid, 34.3 g (0.3 mol) of benzoic acid, 5.7 g of sodium hypophosphite monohydrate, and 576 g of distilled water were placed in a 13.6 L-inner volume autoclave, which was then purged with nitrogen. Stirring was started at 190°C and the inner temperature was raised over 3 hours up to 250°C. At this time, the inner pressure of the autoclave was raised up to 3.02 MPa. The reaction was continued as it was for 1 hour, and thereafter, a low-order condensate was atmospherically

discharged for extraction from a spray nozzle installed on a lower part of the autoclave. Thereafter, the low-order condensate was cooled to room temperature, thereafter crushed to a particle size of 1.5 mm or smaller by a crushing machine, and dried at 110°C for 24 hours. The low-order condensate obtained had a moisture content of 3,000 ppm and a limiting viscosity [η] of 0.14 dl/g.

Then, the low-order condensate was melt polymerized by using a twin-screw extruder having a screw diameter of 30 mm and an LID of 36 at a barrel temperature set at 330°C at a screw revolution number of 200 rpm and at a resin feed rate of 6 kg/h to thereby obtain a semi-aromatic polyamide resin (PA-2).

The composition of the semi-aromatic polyamide (PA-2) obtained was as follows: the content of a component unit derived from terephthalic acid was 70mol%, and the content of a component unit derived from isophthalic acid was 30mol% in component units derived from dicarboxylic acids; and the content of a component unit derived from 1,6-diaminohexane was 100mol% in component units derived from diamines. The limiting viscosity [η] of the semi-aromatic polyamide (PA-2) was 1.0 dl/g, and the melting point Tm thereof was 330°C.

<Preparation of a semi-aromatic polyamide (PA-3)>

979 g (8.43 mol) of 1,6-diaminohexane, 979 g (8.43 mol) of 2-methyl-1,5-diaminopentane, 2,800 g (16.9 mol) of terephthalic acid, 4.00 g ($3.8 \times 10^{-2}$ mol) of sodium hypophosphite as a catalyst, and 406 ml of ion-exchange water were placed in a 13.6 L-inner volume autoclave, which was then purged with nitrogen. Stirring was started at 190°C and the inner temperature was raised over 3 hours up to 250°C. At this time, the inner pressure of the autoclave was raised up to 3.02 MPa. The reaction was continued as it was for 1 hour, and thereafter, a low-order condensate was atmospherically discharged for extraction from a spray nozzle installed on a lower part of the autoclave. Thereafter, the low-order condensate was cooled to room temperature, thereafter crushed to a particle size of 1.5 mm or smaller by a crushing machine, and dried at 110°C for 24 hours. The low-order condensate obtained had a moisture content of 3,000 ppm and a limiting viscosity [η] of 0.15 dl/g, and 3,933 g thereof as a polyamide precursor was obtained.

Then, the polyamide precursor was dried and melt polymerized by using a twin-screw extruder at a cylinder temperature set at 330°C to thereby obtain a semi-aromatic polyamide (PA-3).

The composition of the semi-aromatic polyamide (PA-3) obtained was as follows: the content of a component unit derived from terephthalic acid was 100mol% in component units derived from dicarboxylic acids; and the content of a component unit derived from 1,6-diaminohexane was 50mol%, and the content of a component unit derived from 2-methyl-1,5-diaminopentane was 50mol% in component units derived from diamines. The limiting viscosity [η] of the semi-aromatic polyamide (PA-3) was 1.0 dl/g, and the melting point Tm thereof was 300°C.

<Preparation of a semi-aromatic polyamide (PA-4)>

1,567 g (9.90 mol) of 1,9-nonanediamine, 391 g (2.47 mol) of 2-methyl-1,8-octanediamine, 2,800 g (16.9 mol) of terephthalic acid, 4.00 g ($3.78 \times 10^{-2}$ mol) of sodium hypophosphite as a catalyst, and 406 ml of ion-exchange water were placed in a 13.6 L-inner volume autoclave, which was then purged with nitrogen. Stirring was started at 190°C and the inner temperature was raised over 3 hours up to 250°C. At this time, the inner pressure of the autoclave was raised up to 3.02 MPa. The reaction was continued as it was for 1 hour, and thereafter, a low-order condensate was atmospherically discharged for extraction from a spray nozzle installed on a lower part of the autoclave. Thereafter, the low-order condensate was cooled to room temperature, thereafter crushed to a particle size of 1.5 mm or smaller by a crushing machine, and dried at 110°C for 24 hours. The low-order condensate obtained had a moisture content of 3,000 ppm and a limiting viscosity [η] of 0.99 dl/g, and 3,960 g thereof as a polyamide precursor was obtained.

Then, the polyamide precursor was dried and melt polymerized by using a twin-screw extruder at a cylinder temperature set at 330°C to thereby obtain a semi-aromatic polyamide (PA-4).

The composition of the semi-aromatic polyamide (PA-4) obtained was as follows: the content of a component unit derived from terephthalic acid was 100mol% in component units derived from dicarboxylic acids; and the content of a component unit derived from 1,9-diaminononane was 87.3mol%, and the content of a component unit derived from 2-methyl-1,8-diaminooctane was 12.7mol% in component units derived from diamines. The limiting viscosity of the semi-aromatic polyamide (PA-4) was 0.99 dl/g, and the melting point Tm thereof was 303°C.

The limiting viscosity [η] and the melting point Tm of each of the semi-aromatic polyamide resins (PA-1) to (PA-4) were measured by the following method.

[Limiting viscosity [η]]

The limiting viscosity [η] of the semi-aromatic polyamide resins obtained was measured as follows. 0.5 g of a semi-aromatic polyamide resin was dissolved in 50 ml of a 96.5% sulfuric acid solution. The falling time (s) of the obtained solution was measured under the condition of 25°C ± 0.05°C by using an Ubbelohde viscometer, and the limiting viscosity

[η] was calculated based on "the expression: [η] = ηSP/(C(1+0.205ηSP))".

[η]: limiting viscosity (dl/g)

ηSP: specific viscosity

C: sample concentration (g/dl)

t: falling time of sample solution (s)

t0: falling time of blank sulfuric acid (s)

$$\eta SP=(t-t0)/t0$$

[Melting point Tm]

The melting point Tm of the semi-aromatic polyamide resins was measured according to JIS K7121. Specifically, an endothermic curve of DSC was determined by using a DSC7, manufactured by PerkinElmer, Inc., at a temperature rise rate of 10°C/min, and a temperature at the maximum peak position was taken as a melting point Tm.
The compositions and the physical properties of the semi-aromatic polyamide resins (PA-1) to (PA-4) are shown in Table 1.

[Table 1]

| | Dicarboxylic acid | | | Diamine | | | Melting point (°C) | Limiting viscosity [η] (dl/g) |
|---|---|---|---|---|---|---|---|---|
| | 1 | 2 | molar ratio | 1 | 2 | molar ratio | | |
| PA-1 | TA | AA | 55/45 | C6 (straight-chain) | - | 100/0 | 310 | 1.00 |
| PA-2 | TA | IA | 70/30 | C6 (straight-chain) | - | 100/0 | 330 | 1.00 |
| PA-3 | TA | - | 100/0 | C6 (straight-chain) | C6 (branched) | 50/50 | 300 | 1.00 |
| PA-4 | TA | - | 100/0 | C9 (straight-chain) | C9 (branched) | 80/20 | 303 | 0.99 |

1-2. Olefin Polymer (B1)

(Polymer (B1-1))

<Preparation of a modified ethylene. 1-butene copolymer (PO-1-1)>

An ethylene. 1-butene copolymer (PO-2-1) was prepared by using a Ti-based catalyst.
The content of ethylene in the ethylene. 1-butene copolymer (PO-2-1) was 81mol%; the density thereof was 0.861 $g/cm^3$; and the MFR (ASTM D1238, 190°C, a load of 2.16 kg) thereof was 0.5 g/10 min.
100 parts by mass of the ethylene. 1-butene copolymer (PO-2-1) prepared in the above, 1.2 parts by mass of maleic anhydride, and 0.06 part by mass of a peroxide [trade name: Perhexine-25B, manufactured by NOF Corp.] were mixed by a Henschel mixer, and the mixture obtained was subjected to melt grafting modification by a single-screw extruder of 65 mmϕ set at 230°C to thereby obtain a modified ethylene. 1-butene copolymer (PO-1-1).

<Preparation of a modified ethylene. 1-butene copolymer (PO-1-2)>

A modified ethylene. 1-butene copolymer (PO-1-2) was obtained in the same manner as in the modified ethylene. 1-butene copolymer (PO-1-1), except for altering the amount of maleic anhydride added to 0.6 part by mass.

<Preparation of a modified ethylene. 1-butene copolymer (PO-1-3)>

A modified ethylene. 1-butene copolymer (PO-1-3) was obtained in the same manner as in the modified ethylene. 1-butene copolymer (PO-1-1), except for altering the amount of maleic anhydride added to 2.4 parts by mass.

<Preparation of a modified ethylene-propylene copolymer (PO-1-4)>

An ethylene-propylene copolymer (PO-2-2) was prepared by using a Ti-based catalyst.

The content of ethylene in the ethylene-propylene copolymer (PO-2-2) was 81mol%; the density thereof was 0.869 g/cm$^3$; and the MFR (ASTM D1238, 190°C, a load of 2.16 kg) thereof was 0.6 g/10 min.

100 parts by mass of the ethylene-propylene copolymer (PO-2-2) prepared in the above, 1.2 parts by mass of maleic anhydride, and 0.06 part by mass of a peroxide [trade name: Perhexine-25B, manufactured by NOF Corp.] were mixed by a Henschel mixer, and the mixture obtained was subjected to melt grafting modification by a single-screw extruder of 65 mmϕ set at 230°C to thereby obtain a modified ethylene-propylene copolymer (PO-1-4).

(Polymer (B1-2))

<Unmodified ethylene. 1-butene copolymer (PO-2-1)>

The above ethylene. 1-butene copolymer (PO-2-1) was used.

<Unmodified ethylene-propylene copolymer (PO-2-2)>

The above ethylene-propylene copolymer (PO-2-2) was used.

1-3. Olefin Polymer (B2)

(Polymer (B2-1))

<Preparation of a modified ethylene. 1-butene copolymer (PO-3-1)>

An ethylene. 1-butene copolymer (PO-4-1) was prepared by using a Ti-based catalyst.

The content of ethylene in the ethylene. 1-butene copolymer (PO-4-1) was 98.6mol%; the density thereof was 0.948 g/cm$^3$; and the MFR (ASTM D1238, 190°C, a load of 2.16 kg) thereof was 0.1 g/10 min.

100 parts by mass of the ethylene. 1-butene copolymer (PO-4-1) prepared in the above, 0.8 part by mass of maleic anhydride, and 0.07 part by mass of a peroxide [trade name: Perhexine-25B, manufactured by NOF Corp.] were mixed by a Henschel mixer, and the mixture obtained was subjected to melt grafting modification by a single-screw extruder of 65 mmϕ set at 230°C to thereby obtain a modified ethylene. 1-butene copolymer (PO-3-1).

<Preparation of a modified ethylene. 1-butene copolymer (PO-3-2)>

An ethylene. 1-butene copolymer (PO-4-2) was prepared by using a Ti-based catalyst.

The content of ethylene in the ethylene. 1-butene copolymer (PO-4-2) was 96.1mol%; the density thereof was 0.920 g/cm$^3$; and the MFR (ASTM D1238, 190°C, a load of 2.16 kg) thereof was 0.3 g/10 min.

100 parts by mass of the ethylene. 1-butene copolymer (PO-4-2) prepared in the above, 0.8 part by mass of maleic anhydride, and 0.07 part by mass of a peroxide [trade name: Perhexine-25B, manufactured by NOF Corp.] were mixed by a Henschel mixer, and the mixture obtained was subjected to melt grafting modification by a single-screw extruder of 65 mmϕ set at 230°C to thereby obtain a modified ethylene. 1-butene copolymer (PO-3-2).

<Preparation of a modified ethylene. 1-butene copolymer (PO-3-3)>

An ethylene. 1-butene copolymer (PO-4-3) was prepared by using a Ti-based catalyst.

The content of ethylene in the ethylene. 1-butene copolymer (PO-4-3) was 95.5mol%; the density thereof was 0.919 g/cm$^3$; and the MFR (ASTM D1238, 190°C, a load of 2.16 kg) thereof was 0.2 g/10 min.

100 parts by mass of the ethylene. 1-butene copolymer (PO-4-3) prepared in the above, 0.8 part by mass of maleic anhydride, and 0.07 part by mass of a peroxide [trade name: Perhexine-25B, manufactured by NOF Corp.] were mixed by a Henschel mixer, and the mixture obtained was subjected to melt grafting modification by a single-screw extruder of 65 mmϕ set at 230°C to thereby obtain a modified ethylene. 1-butene copolymer (PO-3-3).

(Polymer (B2-2))

<Unmodified ethylene. 1-butene copolymer (PO-4-1)>

The above ethylene. 1-butene copolymer (PO-4-1) was used.

<Unmodified ethylene. 1-butene copolymer (PO-4-2)>

The above ethylene. 1-butene copolymer (PO-4-2) was used.

<Unmodified ethylene. 1-butene copolymer (PO-4-3)>

The above ethylene. 1-butene copolymer (PO-4-3) was used.

The composition and the physical properties of the olefin polymer (B1) are shown in Table 2, and the composition and the physical properties of each copolymer constituting the olefin polymer (B2) are shown in Table 3.

[Table 2]

| | | B1 | | | | | |
|---|---|---|---|---|---|---|---|
| | | B1-1 (modified) | | | | B1-2 (unmodified) | |
| | | PO-1-1 | PO-1-2 | PO-1-3 | PO-1-4 | PO-2-1 | PO-2-2 |
| Raw material | | PO-2-1 | | | PO-2-2 | - | - |
| Composition | molar ratio | Ethylene/ 1-butene 81/19 | Ethylene/ 1-butene 81/19 | Ethylene/ 1-butene 81/19 | Ethylene/ propylene 81/19 | Ethylene/ 1-butene 81/19 | Ethylene/ propylene 81/19 |
| Density | $g/cm^3$ | 0.866 | 0.865 | 0.870 | 0.873 | 0.861 | 0.869 |
| Content of maleic anhydride component unit (amount of modification) | mass% | 1.0 | 0.5 | 2.0 | 1.0 | 0.0 | 0.0 |
| MFR | g/10 min | 0.6 | 1.1 | 0.5 | 0.6 | 0.5 | 0.6 |

[Table 3]

| | | B2 | | | | | |
|---|---|---|---|---|---|---|---|
| | | B2-1 (modified) | | | B2-2 (unmodified) | | |
| | | PO-3-1 | PO-3-2 | PO-3-3 | PO-4-1 | PO-4-2 | PO-4-3 |
| Raw material | | PO-4-1 | PO-4-2 | PO-4-3 | - | - | - |
| Composition | molar ratio | Ethylene/ 1-butene 98.6/1.4 | Ethylene/ 1-butene 96.1 /3.9 | Ethylene/ 1-butene 95.5/4.5 | Ethylene/ 1-butene 98.6/1.4 | Ethylene/ 1-butene 96.1 /3.9 | Ethylene/ 1-butene 95.5/4.5 |
| Density | $g/cm^3$ | 0.945 | 0.918 | 0.915 | 0.948 | 0.920 | 0.919 |
| Content of maleic anhydride component unit (amount of modification) | mass% | 1.0 | 1.0 | 1.0 | 0.0 | 0.0 | 0.0 |
| MFR | g/10 min | 0.1 | 0.3 | 0.3 | 0.1 | 0.3 | 0.2 |

The amount of modification, the density and the MFR of each copolymer were measured by the following respective methods.

[Amount of modification]

The content (amount of modification) (mass%) of a component unit derived from maleic anhydride of each copolymer was measured by an NMR method. The measurement conditions were as follows.

Measuring apparatus: a nuclear magnetic resonance spectrometer (ECP500 type, manufactured by JEOL Ltd.)
Observation nucleus: $^{13}C$ (125 MHz)
Sequence: single pulse proton decoupling
Pulse width: 4.7 μs (45° pulse)
Repeating time: 5.5 s
Frequency of integration: 10,000 times or more
Solvent: an orthodichlorobenzene/deuterated benzene (volume ratio: 80/20) mixed solvent
Sample concentration: 55 mg/0.6 mL
Measurement temperature: 120°C
Reference value of chemical shift: 27.50 ppm

[Density]

The density was measured by using a density gradient tube according to JIS K7112 at a temperature of 23°C.

[MFR]

The MFR was measured according to ASTM D1238 at 190°C at a load of 2.16 kg. The unit was g/10 min.

1-4. Other Components

<Inorganic filler (C)>

A talc (average particle diameter: 1.6 μm)

<Antioxidant (F)>

A phenolic antioxidant

2. Preparation of Semi-Aromatic Polyamide Resin Composition

(Examples 1 to 13, and Comparative Examples 1 to 14)

In each Example, so as to make the composition indicated in Table 4, 5 or 6, the semi-aromatic polyamide resin (A), the olefin polymer (B1) (PO-1-1 to PO-1-4 and PO-2-1 to PO-2-2), the olefin polymer (B2) (PO-3-1 to PO-3-3 and PO-4-1 to PO-4-3), the inorganic filler (C) and the antioxidant (F) were mixed by a tumbler blender, and thereafter melt kneaded by using a vent-type twin-screw extruder of 30 mmϕ under the condition of a cylinder temperature of 300 to 335°C. Thereafter, the kneaded material was extruded in a strand shape, and cooled in a water tank. Thereafter, the strand was taken up by a pelletizer, and cut to thereby obtain a pellet-shape semi-aromatic polyamide resin composition.
The average amount of modification of the olefin polymers (B1) and (B2) was calculated from the above-mentioned expression (1) by using the compositions indicated in Table 4, 5 or 6 and the values in Table 2 or 3; and the average density was calculated from the above-mentioned expression (2).
The tensile breaking strength and tensile elongation percentage at break and the bending strength and bending elastic modulus of the semi-aromatic polyamide resin compositions obtained were evaluated by the following respective methods.

[Tensile breaking strength, Tensile elongation percentage at break]

The polyamide resin compositions obtained were molded by using the following injection molding machine under the following molding conditions to obtain ASTM dumbbell-type test pieces Type I of 3.2 mm in thickness.

(Molding conditions)

Molding machine: EC75N-2A, manufactured by Toshiba Machine Co., Ltd.
Cylinder temperature of molding machine: the melting point (Tm) of the polyamide resin composition + 10°C
Metal mold temperature: 50°C
Injection speed set: 100 mm/s

The test pieces obtained were allowed to stand at a temperature of 23°C in a nitrogen atmosphere for 24 hours. Then, the tensile test was carried out at a temperature of 23°C in an atmosphere of a relative humidity of 50% to measure the tensile breaking strength (MPa) and the tensile elongation percentage at break (%).

[Bending strength, Bending elastic modulus]

The semi-aromatic polyamide resin compositions obtained were injection molded under the following conditions to fabricate test pieces of 127 mm in length, 12.7 mm in width and 3.2 mm in thickness.

Molding machine: EC75N-2A, manufactured by Toshiba Machine Co., Ltd.
Cylinder temperature of molding machine: (Tm+10)°C, Metal mold temperature: 50°C

The test pieces obtained were allowed to stand at a temperature of 23°C in a nitrogen atmosphere for 24 hours. Then, the bending test was carried out at a temperature of 23°C in an atmosphere of a relative humidity of 50% by a bending tester: AB5, manufactured by NTESCO Co., Ltd., AB5, span: 51 mm, and bending speed: 5mm/min, to measure the bending strength (MPa) and the bending elastic modulus (MPa).

The evaluation results of Examples 1 to 9 and Reference Example 1 are shown in Table 4; the evaluation results of Example 10 and Comparative Examples 1 to 10 are shown in Table 5; and the evaluation results of Examples 11 to 13 and Comparative Examples 11 to 14 are shown in Table 6.

[Table 4]

| No. | | | | | Example 1 | Example 2 | Example 3 | Example 4 | Reference Example 1 | Example 5 | Example 6 | Example 7 | Example 8 | Example 9 |
|---|---|---|---|---|---|---|---|---|---|---|---|---|---|---|
| Composition | (A) | PA-1:6T66 | | mass% | 78.4 | 73.4 | 78.4 | 78.4 | 78.4 | 73.4 | 83.4 | 78.4 | 76.4 | 49.0 |
| | | PA-2:6T6I | | | | | | | | | | | | |
| | | PA-3:6TDT | | | | | | | | | | | | 29.4 |
| | | PA-4:9T | | | | | | | | | | | | |
| | (B1)+(B2) | (B1)+(B2) | | mass% | 20.0 | 25.0 | 20.0 | 20.0 | 20.0 | 25.0 | 15.0 | 20.0 | 22.0 | 20.0 |
| | | (B1)/(B2) | | - | 3.00 | 3.00 | 0.67 | 9.00 | 0.43 | 1.00 | 2.00 | 1.00 | 3.40 | 1.00 |
| | | Average density | | g/cm$^3$ | 0.884 | 0.884 | 0.912 | 0.873 | 0.920 | 0.903 | 0.894 | 0.914 | 0.877 | 0.904 |
| | (B1) | (B1):PO-1+PO-2 | | mass% | 15.0 | 18.8 | 8.0 | 18.0 | 6.0 | 12.5 | 10.0 | 10.0 | 17.0 | 10.0 |
| | | PO-1 | PO-1-1 | | 15.0 | 18.8 | 8.0 | 18.0 | 6.0 | | | | 17.0 | 10.0 |
| | | | PO-1-2 | | | | | | | 12.5 | | | | |
| | | | PO-1-3 | | | | | | | | 10.0 | | | |
| | | | PO-1-4 | | | | | | | | | 10.0 | | |
| | | PO-2 | PO-2-1 | | | | | | | | | | | |
| | | | PO-2-2 | | | | | | | | | | | |
| | | Average amount of modification | | mass% | 1.00 | 1.00 | 1.00 | 1.00 | 1.00 | 0.50 | 2.00 | 1.00 | 1.00 | 1.00 |
| | | Average density d1 | | g/cm$^3$ | 0.866 | 0.866 | 0.866 | 0.866 | 0.866 | 0.865 | 0.870 | 0.873 | 0.866 | 0.866 |
| | (B2) | (B2):PO-3+PO-4 | | mass% | 5.0 | 6.3 | 12.0 | 2.0 | 14.0 | 12.5 | 5.0 | 10.0 | 5.0 | 10.0 |
| | | PO-3 | PO-3-1 | | 5.0 | 6.3 | 12.0 | 2.0 | 14.0 | 12.5 | 5.0 | 10.0 | | 10.0 |
| | | | PO-3-2 | | | | | | | | | | 5.0 | |
| | | | PO-3-3 | | | | | | | | | | | |
| | | PO-4 | PO-4-1 | | | | | | | | | | | |
| | | | PO-4-2 | | | | | | | | | | | |
| | | | PO-4-3 | | | | | | | | | | | |

(continued)

| No. | | | Example 1 | Example 2 | Example 3 | Example 4 | Reference Example 1 | Example 5 | Example 6 | Example 7 | Example 8 | Example 9 |
|---|---|---|---|---|---|---|---|---|---|---|---|---|
| | Average amount of modification | mass% | 1.00 | 1.00 | 1.00 | 1.00 | 1.00 | 1.00 | 1.00 | 1.00 | 1.00 | 1.00 |
| | Average density d2 | $g/cm^3$ | 0.945 | 0.945 | 0.945 | 0.945 | 0.945 | 0.945 | 0.945 | 0.945 | 0.918 | 0.945 |
| Difference in average density (d2-d1) | | $g/cm^3$ | 0.079 | 0.079 | 0.079 | 0.079 | 0.079 | 0.080 | 0.075 | 0.072 | 0.052 | 0.079 |
| (C) | Talc | mass% | 1.00 | 1.00 | 1.00 | 1.00 | 1.00 | 1.00 | 1.00 | 1.00 | 1.00 | 1.00 |
| (F) | Phenolic antioxidant | mass% | 0.60 | 0.60 | 0.60 | 0.60 | 0.60 | 0.60 | 0.60 | 0.60 | 0.60 | 0.60 |
| Physical property | Tensile breaking strength | MPa | 53 | 50 | 51 | 53 | 65 | 55 | 73 | 61 | 51 | 53 |
| | Tensile elongation at break | % | 90 | 99 | 75 | 70 | 69 | 102 | 55 | 86 | 94 | 52 |
| | Bending strength | MPa | 93 | 65 | 94 | 88 | 94 | 76 | 106 | 84 | 74 | 80 |
| | Bending elastic modulus | MPa | 2200 | 1600 | 2200 | 1800 | 2000 | 1800 | 2400 | 2000 | 1800 | 1700 |

[Table 5]

| No. | | | | | Comparative Example 1 | Comparative Example 2 | Comparative Example 3 | Comparative Example 4 | Example 10 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|---|
| Composition | (A) | PA-1:6T66 | | mass% | 98.4 | 93.4 | 63.4 | 78.4 | 78.4 | 78.4 | 78.4 | 78.4 | 73.4 | 83.4 | 49.0 |
| | | PA-2:6T61 | | | | | | | | | | | | | |
| | | PA-3:6TDT | | | | | | | | | | | | | 29.4 |
| | | PA-4:9T | | | | | | | | | | | | | |
| | (B1) + (B2) | (B1)+(B2) | | mass% | | 5.0 | 35.0 | 20.0 | 20.0 | 20.0 | 20.0 | 20.0 | 25.0 | 15.0 | 20.0 |
| | | (B1)/(B2) | | - | | 1.50 | 1.00 | 0.05 | 100.01 | 0.33 | 0.00 | 3.00 | - | - | - |
| | | Average density | | q/cm3 | | 0.896 | 0.904 | 0.941 | 0.866 | 0.924 | 0.945 | 0.881 | 0.865 | 0.870 | 0.866 |
| | (B1) | (B1):PO-1+PO-2 | | mass% | | 3.0 | 17.5 | 1.0 | 19.8 | 5.0 | | 15.0 | 25.0 | 15.0 | 20.0 |
| | | PO-1 | PO-1-1 | | | 3.0 | 17.5 | 1.0 | 19.8 | 5.0 | | | | | 20.0 |
| | | | PO-1-2 | | | | | | | | | | 25.0 | | |
| | | | PO-1-3 | | | | | | | | | | | 15.0 | |
| | | | PO-1-4 | | | | | | | | | | | | |
| | | PO-2 | PO-2-1 | | | | | | | | | 15.0 | | | |
| | | | PO-2-2 | | | | | | | | | | | | |
| | | Average amount of modification | | mass% | | 1.00 | 1.00 | 1.00 | 1.00 | 1.00 | | 0.00 | 0.50 | 2.00 | 1.00 |
| | | Average density d1 | | q/cm3 | | 0.866 | 0.866 | 0.866 | 0.866 | 0.866 | | 0.861 | 0.865 | 0.870 | 0.866 |

(continued)

| No. | | | | | Comparative Example 1 | Comparative Example 2 | Comparative Example 3 | Comparative Example 4 | Example 10 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|---|
| | (B2) | (B2):PO-3+PO-4 | | mass% | | 2.0 | 17.5 | 19.0 | 0.20 | 15.0 | 20.0 | 5.0 | | | |
| | | PO-3 | PO-3-1 | | | 2.0 | 17.5 | 19.0 | 0.20 | 15.0 | 20.0 | 5.0 | | | |
| | | | PO-3-2 | | | | | | | | | | | | |
| | | | PO-3-3 | | | | | | | | | | | | |
| | | PO-4 | PO-4-1 | | | | | | | | | | | | |
| | | | PO-4-2 | | | | | | | | | | | | |
| | | | PO-4-3 | | | | | | | | | | | | |
| | | Average amount of modification | | mass% | | 1.00 | 1.00 | 1.00 | 1.00 | 1.00 | 1.00 | 1.00 | | | |
| | | Average density d2 | | q/cm3 | | 0.945 | 0.945 | 0.945 | 0.945 | 0.945 | 0.945 | 0.945 | | | |
| | Difference in average density (d2-d1) | | | $g/cm^3$ | | 0.079 | 0.079 | 0.079 | 0.079 | 0.079 | 0.945 | 0.084 | | | |
| | (C) | Talc | | mass% | 1.00 | 1.00 | 1.00 | 1.00 | 1.00 | 1.00 | 1.00 | 1.00 | 1.00 | 1.00 | 1.00 |
| | (F) | Phenolic antioxidant | | mass% | 0.60 | 0.60 | 0.60 | 0.60 | 0.60 | 0.60 | 0.60 | 0.60 | 0.60 | 0.60 | 0.60 |

(continued)

| No. | | | Comparative Example 1 | Comparative Example 2 | Comparative Example 3 | Comparative Example 4 | Example 10 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|
| Physical property | Tensile breaking strength | MPa | 103 | 85 | Unextrudable | 57 | 50 | 55 | 57 | 57 | 50 | Unextrudable | 47 |
| | Tensile elongation at break | % | 4 | 26 | | 42 | 65 | 58 | 39 | 58 | 45 | | 41 |
| | Bending strength | MPa | 149 | 124 | | 82 | 69 | 95 | 90 | 86 | 74 | | 70 |
| | Bending elastic modulus | MPa | 3100 | 2800 | | 1900 | 1700 | 2300 | 2300 | 2000 | 1800 | | 1630 |

[Table 6]

| No. | | | | | Example 11 | Comparative Example 11 | Example 12 | Comparative Example 12 | Example 13 | Comparative Example 13 | Comparative Example 14 |
|---|---|---|---|---|---|---|---|---|---|---|---|
| Composition | (A) | PA-1:6T66 | | mass% | 78.4 | 78.4 | | | | | 78.4 |
| | | PA-2:6T6I | | | | | 78.4 | 78.4 | | | |
| | | PA-3:6TDT | | | | | | | | | |
| | | PA-4:9T | | | | | | | 78.4 | 78.4 | |
| | (B1)+(B2) | (B1)+(B2) | | mass% | 20.0 | 20.0 | 20.0 | 20.0 | 20.0 | 20.0 | 20.0 |
| | | (B1)/(B2) | | - | 300 | - | 300 | - | 300 | - | 0.33 |
| | | Average density | | g/cm$^3$ | 0.885 | 0.868 | 0.884 | 0.866 | 0.884 | 0.866 | 0.904 |
| | (B1) | (B1):PO-1+PO-2 | | mass% | 15.0 | 20.0 | 15.0 | 20.0 | 15.0 | 20.0 | 5.0 |
| | | PO-1 | I PO-1-1 | | 15.0 | 15.0 | 15.0 | 20.0 | 15.0 | 20.0 | 5.0 |
| | | | PO-1-2 | | | | | | | | |
| | | | PO-1-3 | | | | | | | | |
| | | | PO-1-4 | | | 5.0 | | | | | |
| | | PO-2 | PO-2-1 | | | | | | | | |
| | | | PO-2-2 | | | | | | | | |
| | | Average amount of modification | | mass% | 1.00 | 1.00 | 1.00 | 1.00 | 1.00 | 1.00 | 1.00 |
| | | Average density d1 | | g/cm$^3$ | 0.866 | 0.868 | 0.866 | 0.866 | 0.866 | 0.866 | 0.866 |
| | (B2) | (B2):PO-3+PO-4 | | mass% | 5.0 | | 5.0 | | 5.0 | | 15.0 |
| | | | PO-3-1 | | 2.5 | | 5.0 | | 5.0 | | |
| | | PO-3 | PO-3-2 | | | | | | | | 5.0 |
| | | | PO-3-3 | | | | | | | | |
| | | | PO-4-1 | | 2.5 | | | | | | |
| | | PO-4 | PO-4-2 | | | | | | | | 10.0 |
| | | | PO-4-3 | | | | | | | | |

(continued)

| No. | | | | Example 11 | Comparative Example 11 | Example 12 | Comparative Example 12 | Example 13 | Comparative Example 13 | Comparative Example 14 |
|---|---|---|---|---|---|---|---|---|---|---|
| | | Average amount of modification | mass% | 0.50 | | 1.00 | | 1.00 | | 0.33 |
| | | Average density d2 | $g/cm^3$ | 0.946 | | 0.945 | | 0.945 | | 0.918 |
| | Difference in average density (d2-d1) | | $g/cm^3$ | 0.080 | | 0.079 | | 0.079 | | 0.052 |
| | (C) | Talc | mass% | 1.0 | 1.0 | 1.00 | 1.00 | 1.00 | 1.00 | 1.00 |
| | (F) | Phenolic antioxidant | mass% | 0.6 | 0.6 | 0.60 | 0.60 | 0.60 | 0.60 | 0.60 |
| Physical property | Tensile breaking strength | | MPa | 54 | 53 | 63 | 60 | 67 | 65 | 55 |
| | Tensile elongation at break | | % | 75 | 65 | 36 | 27 | 95 | 75 | 57 |
| | Bending strength | | MPa | 76 | 74 | 90 | 87 | 96 | 90 | 81 |
| | Bending elastic modulus | | MPa | 1800 | 1800 | 2100 | 2000 | 2200 | 2000 | 1900 |

As indicated in Tables 4 to 6, it can be seen that in Examples 1 to 9 and 11 to 13 in which the total content of the olefin polymer (B1) and the olefin polymer (B2) was 10 to 30 parts by mass with respect to 100 parts by mass of the total of (A), (B1) and (B2), and the content mass ratio (B1/B2) was 0.5 or higher and 99 or lower, and in Example 10 in which the content mass ratio (B1/B2) was 100, (in particular, when the compositions are compared in which the kinds of the semi-aromatic polyamide resin (A) and the total contents of B1 and B2 are comparable) all of them have high strengths (tensile breaking strength, bending strength) and at the same time a high tensile elongation at break.

By contrast, as indicated in Table 5, it can be seen that in Comparative Examples 1 and 2, in which the total content of the olefin polymer (B1) and the olefin polymer (B2) was lower than 10 parts by mass with respect to 100 parts by mass of the total of (A), (B1) and (B2), the tensile elongation at break was remarkably low. On the other hand, in Comparative Example 3, in which the total content of the olefin polymer (B1) and the olefin polymer (B2) was higher than 30 parts by mass with respect to 100 parts by mass of the total of (A), (B1) and (B2), the extrusion could not be carried out. It is presumed that the reason for this is the fact that the interaction between the modified ethylene. 1-butene copolymers (PO-1) and (PO-3) contained in the olefin polymer (B1) and the olefin polymer (B2), and the semi-aromatic polyamide resin (A) became too strong.

It can be seen that in Comparative Examples 1 and 8 to 13, which contained no (B2), the strength of the molded products was remarkably low. On the other hand, it can be seen that in Comparative Examples 4, 6 and 14, which contained no (B1) or had a content mass ratio (B1/B2) of lower than 0.5, the tensile elongation at break was low.

The present application claims priority based on Japanese Patent Application No. 2020-63404, filed on March 31, 2020, the entire content of which is hereby incorporated by reference.

Industrial Applicability

The semi-aromatic polyamide resin composition of the present invention can provide a semi-aromatic polyamide resin composition having a high strength and simultaneously having a high elongation at break. The resin composition is especially suitably used, for example, for molding of automotive parts.

## Claims

1. A semi-aromatic polyamide resin composition, comprising:

a semi-aromatic polyamide resin (A) having a melting point of 280 to 330°C as measured by a differential scanning calorimeter (DSC);
an olefin polymer (B 1) having a relatively low density; and
an olefin polymer (B2) having a relatively high density,
wherein:

the semi-aromatic polyamide resin (A) comprises a component unit derived from a dicarboxylic acid and a component unit derived from a diamine;
the component unit derived from a dicarboxylic acid contains 45mol% or more of a component unit derived from terephthalic acid with respect to a total molar number of the component unit derived from a dicarboxylic acid;
the component unit derived from a diamine contains 50 to 100mol% of a component unit derived from a straight-chain alkylenediamine having 4 to 18 carbon atoms, and 0 to 50mol% of a component unit derived from a branched alkylenediamine having 4 to 18 carbon atoms;
the olefin polymer (B1) is a modified ethylene·$\alpha$-olefin copolymer (B1-1) modified with an unsaturated carboxylic acid or a derivative thereof and having a density of 0.80 g/cm$^3$ or higher and lower than 0.89 g/cm$^3$, or a mixture of the modified ethylene·$\alpha$-olefin copolymer (B1-1) and an unmodified ethylene·$\alpha$-olefin copolymer (B1-2) having a density of 0.80 g/cm$^3$ or higher and lower than 0.89 g/cm$^3$;
an average content of the component unit derived from an unsaturated carboxylic acid or a derivative thereof in the olefin polymer (B1) is 0.01 to 5mass%;
the olefin polymer (B2) is composed of at least one of a modified ethylene polymer (B2-1) modified with an unsaturated carboxylic acid or a derivative thereof and having a density of 0.89 to 0.97 g/cm$^3$, and an unmodified ethylene polymer (B2-2) having a density of 0.89 to 0.97 g/cm$^3$;
an average content of the component unit derived from an unsaturated carboxylic acid or a derivative thereof in the olefin polymer (B2) is 0 to 5mass%;
a total content of the olefin polymer (B1) and the olefin polymer (B2) is 10 to 30 parts by mass with respect to 100 parts by mass of the total of the semi-aromatic polyamide resin (A), the olefin polymer (B1) and the

olefin polymer (B2); and
a content mass ratio (B1/B2) of the olefin polymer (B1) to the olefin polymer (B2) satisfies $0.5 \leq B1/B2 \leq 500$.

2. The semi-aromatic polyamide resin composition according to claim 1, wherein:
the olefin polymer (B2) comprises the modified ethylene polymer (B2-1).

3. The semi-aromatic polyamide resin composition according to claim 2, wherein:
the modified ethylene polymer (B2-1) is a modified ethylene·$\alpha$-olefin copolymer.

4. The semi-aromatic polyamide resin composition according to any one of claims 1 to 3, wherein:
when an average density of the polymers constituting the olefin polymer (B1) is taken as d1, and an average density of the polymers constituting the olefin polymer (B2) is taken as d2, a difference (d2-d1) in average density is 0.015 g/$cm^3$ or higher.

5. The semi-aromatic polyamide resin composition according to any one of claims 1 to 4, wherein:
the component unit derived from a diamine contains, with respect to a total molar number of the component unit derived from a diamine, 50 to 99mol% of the component unit derived from a straight-chain alkylenediamine having 4 to 18 carbon atoms and 1 to 50mol% of the component unit derived from a branched alkylenediamine having 4 to 18 carbon atoms.

6. The semi-aromatic polyamide resin composition according to any one of claims 1 to 5, wherein:
the straight-chain alkylenediamine having 4 to 18 carbon atoms is 1,6-diaminohexane.

7. The semi-aromatic polyamide resin composition according to any one of claims 1 to 6, wherein:
the branched alkylenediamine having 4 to 18 carbon atoms is 2-methyl-1,5-diaminopentane.

8. The semi-aromatic polyamide resin composition according to any one of claims 1 to 7, further comprising an inorganic filler (C).

9. A molded product comprising a semi-aromatic polyamide resin composition according to any one of claims 1 to 8.

## INTERNATIONAL SEARCH REPORT

International application No.
PCT/JP2021/009716

A. CLASSIFICATION OF SUBJECT MATTER
Int. Cl. C08L23/08(2006.01)i, C08L23/26(2006.01)i, C08L77/06(2006.01)i, C08K3/013(2018.01)i
FI: C08L77/06, C08L23/08, C08L23/26, C08K3/013
According to International Patent Classification (IPC) or to both national classification and IPC

B. FIELDS SEARCHED
Minimum documentation searched (classification system followed by classification symbols)
Int. Cl. C08L23/08, C08L23/26, C08L77/06, C08K3/013

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | WO 2019/035484 A1 (MITSUI CHEMICALS, INC.) 21 February 2019, claims, examples | 1-9 |
| X<br>A | JP 2008-508401 A (SOLVAY ADVANCED POLYMERS LLC) 21 March 2008, comparative example 4 | 1, 2, 4, 6, 8, 9<br>3, 5, 7 |
| A | JP 2019-512414 A (SOLVAY SPECIALTY POLYMERS USA, LLC) 16 May 2019, paragraph [0076] | 1-9 |
| A | JP 9-507508 A (E. I. DU PONT DE NEMOURS & CO.) 29 July 1997, p. 9, lines 5-8 | 1-9 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20.04.2021 | 27.04.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/009716

| Patent Documents referred to in the Report | Publication Date | Patent Family | Publication Date |
|---|---|---|---|
| WO 2019/035484 A1 | 21.02.2019 | (Family: none) | |
| JP 2008-508401 A | 21.03.2008 | US 2007/0213475 A1<br>comparative example 4<br>KR 10-2007-0039571 A<br>comparative example 4<br>CN 1993425 A<br>comparative example 4 | |
| JP 2019-512414 A | 16.05.2019 | CN 109071802 A<br>paragraph [0078] | |
| JP 9-507508 A | 29.07.1997 | EP 734419 B1<br>p. 4, lines 47, 48 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4108855 A
- JP 2041318 A
- JP 5098152 A
- JP 2240160 A
- JP 2010202724 A
- JP 2020063404 A